# EUROPEAN PATENT APPLICATION

(11) **EP 2 168 919 A1**
(43) Date of publication of application: **31.03.2010**
(21) Application number: 09171714.0
(22) Date of filing: 30.09.2009
(51) Int. Cl.: C01G 23/00

(54) **Fine-particles synthesis method and electronic-component manufacturing method**

(30) Priority: 30.09.2008 JP 2008254432; 28.08.2009 JP 2009198508; 28.08.2009 JP 2009198509; 28.08.2009 JP 2009198510
(71) Applicant: TDK Corporation, Tokyo 103-8272 (JP)
(72) Inventor: Huang, Jintao, Chuo-ku Tokyo 103-8272 (JP); Imura, Tomoya, Chuo-ku Tokyo 103-8272 (JP); Nakahata, Isao, Chuo-ku Tokyo 103-8272 (JP); Masuzawa, Kiyoyuki, Chuo-ku Tokyo 103-8272 (JP)
(74) Representative: Grünecker, Kinkeldey, Stockmair & Schwanhäusser Anwaltssozietät

(57) **Abstract**

A method of synthesizing fine particles includes creating a subcritical or supercritical reaction environment by application of at least one of heat and pressure with a mixed medium of water and a solvent of lower critical temperature and lower critical pressure than water, so that the mixed medium comes into a supercritical state at a lower temperature and a lower pressure than those in a case of water alone; and leaving source materials under the created reaction environment as a reaction field for a predetermined time to produce fine particles.

## Description

### TECHNICAL FIELD

The present invention belongs to the fields of the fine particles synthesis of producing metal-oxide powder and the manufacture of an electronic component, and more particularly, relates to a fine particles synthesis method for producing barium titanate fine particles used as a dielectric material, a piezoelectric material, and an electronic material of a semiconductor or the like those used for manufacturing electronic components, such as capacitors and a positive temperature coefficient (PTC) element, and a method for manufacturing the electronic component.

### BACKGROUND ART

Conventionally, it has been known that, as tetragonal barium titanate (BaTio₃) has a very high relative permittivity, by application of BaTio₃ to a laminated ceramic capacitor, a thickness of a dielectric layer can be reduced to about a few micrometers (µm), and thus the capacitor can be miniaturized and its capacitance can be increased. With the miniaturization of the capacitor, the dielectric layer tends to get thinner. In response to this, there has been developed various technologies for microparticulation of barium titanate powder used as a dielectric material of the dielectric layer in nanometer (nm) order.

As a method for producing such barium titanate fine particles, there has been developed various methods such as a solid reaction method, an oxalic acid method, and a sol-gel method. Furthermore, temperature and pressure are key parameters of a chemical reaction, and there is a liquid phase reaction causing a liquid phase to be reacted by increasing a reaction temperature to above a boiling point of a liquid medium by application of heat and increasing a pressure of a system to be higher than an atmospheric pressure. As a method of causing such a liquid phase reaction, there are a hydrothermal synthesis method, a solvothermal method (reaction), a supercritical hydrothermal method, and the like. In the liquid phase reaction causing a liquid phase to be reacted by increasing a reaction temperature to above a boiling point of a liquid medium by application of heat and increasing a pressure of a system to be higher than an atmospheric pressure, the reaction is referred to as "a hydrothermal reaction" if water is used, and referred to as "a solvothermal reaction" if other organic solvents are used as a reaction medium. By use of the solvothermal method, nanoparticles of about a few nanometers in diameter can be produced; however, it is often the case that it takes a few hours or days to produce the nanoparticles. Therefore, it is difficult to produce fine particles of about several tens of nanometers efficiently.

On the other hand, by use of the supercritical hydrothermal method based on temperature and pressure exceeding critical temperature and pressure of a liquid, a high ionic reaction rate is achieved, and it is easy to produce nanoparticles. The supercritical hydrothermal method can be applied to a flow production process for mass production. The supercritical hydrothermal method is a method for producing cubic barium titanate nanoparticles having a particle diameter of 30 nm or less or tetragonal barium titanate nanoparticles having a particle diameter of 50 nm or less in such a manner that titanium compound solution is mixed with barium salt solution, and after adding alkaline aqueous solution to the mixture, the mixture undergoes a hydrothermal reaction in water in a subcritical or supercritical state. For example, see Japanese Patent Application Laid-open (JP-A) No. 2003-261329 and JP-A No. 2005-289737.

In a case of a conventional supercritical hydrothermal method as shown in JP-A No. 2003-261329 and JP-A No. 2005-289737 and the like, although a process can be performed under a condition of a temperature lower than that is in a thermal decomposition method or the like, the condition of the temperature is still required to be a condition of such a high temperature as 400°C or more, exceeding the critical temperature of water (374°C). In addition, to obtain a subcritical water or supercritical water state, as for a pressure, a condition of the pressure is also required to be a condition of such a high pressure as 30 MPa or more, exceeding the critical pressure of water (22 MPa).

As a result, there are problems of a corrosion of a reaction container, a pipe, and the like, and impurity incorporation into a product due to the corrosion. In other words, there are not many materials that can be used under a condition of temperature and pressure over the critical temperature and critical pressure of supercritical water. As available materials, there are steel use stainless (SUS), a corrosion-resistant hastelloy® material, and the like. However, under a condition of high-temperature and high-pressure, such materials may undergo a corrosion, and impurities, such as iron (Fe), chromium (Cr), and nickel (Ni), may be incorporated into a target product such as barium titanate, resulting in quality deterioration. Furthermore, as for titanium (Ti) having a high corrosion resistance, the strength is decreased under high temperature of 350°C or more, so that Ti cannot be used as a material of the reaction container, the pipe, and the like of the conventional supercritical hydrothermal method as shown in the JP-A No. 2003-261329 and JP-A No. 2005-289737.

Moreover, in a case of the simple supercritical hydrothermal method using water, nanoparticles having a size of a few nanometers to several tens of nanometers and a very high specific surface area of about several tens of M²/g can be synthesized. However, this method causes a decrease in entire Gibbs free energy, and thus is prone to particle aggregation. If the nanoparticles are aggregated, a quality as powder is deteriorated.

Furthermore, in a case of the solvothermal method using no water at all, even under a condition of above the critical temperature and critical pressure of a solvent, a decomposing ability with respect to organic substances is not as high as water. Thus, to synthesize fine particles, an extremely long reaction time is required as compared with the supercritical hydrothermal method.

Moreover, when fine particles are synthesized by the conventional flow supercritical hydrothermal method as shown in JP-A No. 2003-261329 and JP-A No. 2005-289737 and the like, a room-temperature source material slurry is rapidly heated to come into a supercritical state, so that a large amount of high-temperature water is required. For example, when the room-temperature slurry is mixed with high-temperature water of about 500°C, it exceeds 374°C as the critical temperature of water, so that supercritical water about four times or more as much as a flow of the source material slurry is required. Consequently, a concentration of a reactant is decreased, and a synthetic efficiency is lowered. On the other hand, if the slurry is heated before being mixed with the high-temperature water, a hydrothermal synthesis occurs while the slurry is heated, so that it is not possible to achieve a supercritical reaction.

A batch process is a process that processing performed in single equipment is broken into processes on the basis of a certain amount of time or unit operation, and source materials are thrown in the equipment in a lump with respect to each process. Such a batch process is suited to mass production. When reaction conditions of a conventional batch hydrothermal synthesis are applied to a supercritical reaction environment, it is conceivable that titanium compound solution is mixed with barium salt solution, and the mixed medium of the titanium compound solution and the barium salt solution is thrown in a reaction container together with alkaline aqueous solution, and then temperature and pressure are increased by the application of heat thereby putting the mixed medium into a supercritical state eventually. The temperature and pressure in the early stage of the reaction are significantly lower than those in the latter half of the reaction. As the reaction is carried on while the temperature and pressure are increased, the temperature and pressure conditions vary. As a result, produced particles may be coarsened, their uniformity may deteriorate, or their crystallinity may decrease. In this manner, in the batch synthesis, it may fail to achieve the reaction under the supercritical environment.

The present invention is made in consideration of the above problems, and an object of the present invention is to provide a synthesis method of fine particles, which is capable of reducing a corrosion of a reaction container and the like, preventing an impurity due to the corrosion from being mixed into a product, and broadening choices of materials of the reaction container and the like, and a method for manufacturing an electronic component. Furthermore, another object of the present invention is to provide a fine-particles synthesis method for producing fine particles having a low content of impurities, such as Fe, Cr, and Ni, specifically, a content of 200 parts per million (ppm) and is capable of being used as a high-purity source material for manufacturing an electronic component and a method for manufacturing the electronic component made of the fine particles. Moreover, still another object of the present invention is to provide a fine-particles synthesis method capable of synthesizing highly-dispersible and less-aggregated particles (nanoparticles) in a short time by reaction at high speed and a method for manufacturing an electronic component made of the fine particles.

The present invention is made in consideration of the above problems, and an object of the present invention is to provide a method for producing a larger amount of nanoparticles capable of achieving a higher concentration of a source material in a reaction region than that is in a conventional flow supercritical hydrothermal synthesis (for example, about one digit larger than that is in the conventional flow supercritical hydrothermal synthesis) and a method for manufacturing an electronic component made of the nanoparticles.

The present invention is made in consideration of the above problems, and an object of the present invention is to provide a fine-particles synthesis method for producing fine particles having a small particle diameter and a high crystallinity while generating a subcritical reaction environment or a supercritical reaction environment by a batch process and a method for manufacturing an electronic component.

### DISCLOSURE OF INVENTION

A method of synthesizing fine particles according to an aspect of the present invention includes creating a subcritical or supercritical reaction environment by at least one of heating and applying pressure to a mixed medium of water and a solvent of lower critical temperature and lower critical pressure than water, so that the mixed medium comes into a supercritical state at a lower temperature and a lower pressure than those of pure water; and leaving a source material under the created reaction environment in a reaction field for a predetermined time to produce fine particles.

A method of synthesizing fine particles according to another aspect of the present invention includes pressurizing and heating a source material slurry, the slurry being prepared by mixing source materials and a solvent that comes into a supercritical state at a lower pressure and a lower temperature than those of pure water; creating a subcritical or supercritical reaction environment in a reaction path by application of pressure while supplying the pressurized and heated source material slurry and an accelerant containing water separately to the reaction path; leaving the source material slurry under the created reaction environment in a reaction field for a predetermined time to produce fine particles; and cooling the produced fine particles to stop growth of the fine particles.

A method of synthesizing fine particles according to still another aspect of the present invention includes at least heating a slurry, the slurry being prepared by mixing source materials and a solvent that comes into a supercritical state at a lower pressure and a lower temperature than those of pure water; creating a subcritical or supercritical reaction environment by applying at least heat to a mixture of the heated slurry and an accelerant containing water; leaving the slurry under the reaction environment for a predetermined time to produce fine particles; and stopping growth of the fine particles after a lapse of the predetermined time.

A method of manufacturing an electronic component according to still another aspect of the present invention includes manufacturing the electronic component containing an electronic material produced with the fine particles produced by the method according to the present invention.

### BRIEF DESCRIPTION OF DRAWINGS

Fig. 1A is a characteristic diagram illustrating a critical temperature condition of a water-ethanol mixed medium and a portion of experiment data for explaining a summary of the present invention;
Fig. 1B is a characteristic diagram illustrating a critical pressure condition of the water-ethanol mixed medium and a portion of experiment data for explaining a summary of the present invention.
Fig. 2 is a schematic configuration diagram schematically-showing continuous-flow production equipment applied in a first embodiment of the present invention.
Fig. 3 is a schematic process chart illustrating a method for producing barium titanate according to the first embodiment of the present invention with the continuous-flow production equipment.
Fig. 4 is a schematic configuration diagram schematically-showing continuous-flow production equipment applied in a second present embodiment of the present invention.
Fig. 5 is a schematic configuration diagram schematically-showing batch production equipment applied in a third embodiment of the present invention.
Fig. 6 is a schematic process chart illustrating a method for producing barium titanate according to the third embodiment of the present invention with the batch production equipment.
Fig. 7 is a schematic configuration diagram schematically-showing batch production equipment applied in a fourth embodiment of the present invention.
Fig. 8A is a conceptual diagram showing changes in pressure and temperature in a fine-particles synthesis method according to the fourth embodiment.
Fig. 8B is a conceptual diagram showing changes in pressure and temperature in a fine-particles production method employing a conventional batch hydrothermal synthesis method.
Fig. 9 is an explanatory diagram schematically-showing a transmission electron microscope image obtained through observation of an atomic arrangement of synthesized fine particles.
Fig. 10 is a cross-section diagram illustrating a configuration example of a laminated ceramic capacitor to which a fifth embodiment of the present invention is applied.
Fig. 11A is an explanatory diagram schematically-showing a SEM photo of produced particles as sample A.
Fig. 11B is an explanatory diagram schematically-showing a SEM photo of produced particles as sample B.
Fig. 12A is a graph showing measured results of a particle size distribution shown in Fig. 11A.
Fig. 12B is a graph showing measured results of a particle size distribution shown in Fig. 11B.

### BEST MODE(S) FOR CARRYING OUT THE INVENTION

Exemplary embodiments of a fine-particles synthesis method and a method for manufacturing an electronic component according to the present invention are explained in detail below. The present invention is not limited to the embodiments, and various modifications and variations can be made without departing from the spirit and scope of the present invention. Furthermore, elements in the embodiment described below may include an element that can be easily conceived by those skilled in the art and/or an element substantially identical to that is disclosed in the prior art.

A fine-particles synthesis method according to the present invention is that with a mixed medium of water and a solvent of lower critical temperature and lower critical pressure than water, the mixed medium comes into a supercritical state at a lower temperature and a lower pressure than those in a case of water alone, a subcritical or supercritical reaction environment is generated by the application of heat and/or pressure, and fine particles shall be synthesized in the reaction environment. Because of this, a critical condition for bringing the mixed medium into a subcritical or supercritical state is relaxed as compared with that is in the case of water alone.

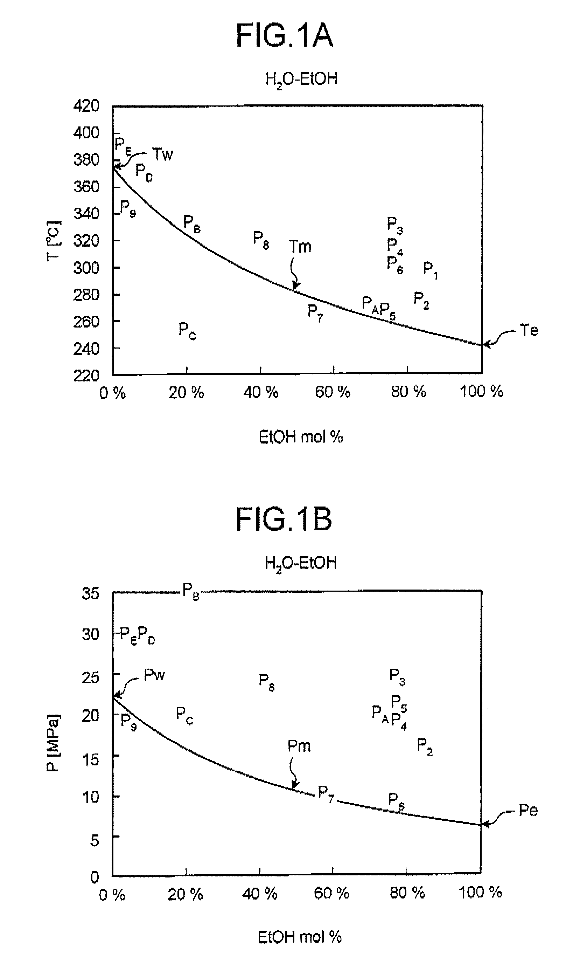

As such a solvent, there is a polar organic solvent that has lower critical temperature/critical pressure than those of pure water and is soluble in water in a supercritical state. As the polar organic solvent that can be used in the present invention, there are, for example, ethanol (about 241°C, 6 MPa), methanol (about 239°C, 8 MPa), isopropanol (about 235°C, 4.8 MPa), methyl ether (127°C, 5.3 MPa), and acetone (235°C, 4.6 MPa). In this case, ethanol is used as an example of the solvent. Figs. 1A and 1B are characteristic diagrams illustrating critical conditions of a mixed medium of water and ethanol. Fig. 1A shows a relation between critical temperature and ethanol concentration, and Fig. 1B shows a relation between critical pressure and ethanol concentration. Furthermore, Figs. 1A and 1B also show measured results of Examples to be described later (i.e., a portion of experiment data, letter "P" + subscript indicating experiment number). As the critical conditions, critical conditions described in the literature: by A. A. Abdurashidova, A. R. Bazaev, E. A. Bazaev, and I. M. Abdulagatov, "The thermal properties of water-ethanol system in the near-critical and supercritical states", High Temperature Vol. 45 No. 2, 2007, p178-186 (hereinafter, referred to as "reference document 1") are used. First, in a case of water alone, a critical temperature Tw is about 374°C, and a critical pressure Pw is about 22 MPa. On the other hand, in a case of ethanol alone, although a decomposing ability of supercritical ethanol is slightly lower than that of supercritical water, a critical temperature Te is about 241°C, and a critical pressure Pe is about 6.1 MPa. The critical conditions of ethanol are lower than those of water. In a mixed medium of such water and ethanol, as shown in Figs. 1A and 1B, a critical temperature Tm and a critical pressure Pm vary depending on a weight fraction of ethanol. Specifically, by mixing ethanol into water, a critical temperature and a critical pressure drop more than those in the case of water alone. The higher the weight fraction of ethanol is, the more the critical temperature and the critical pressure drop.

Thus, the critical temperature Tm and the critical pressure Pm of the mixed medium are adjusted by adjusting a ratio of composition of the mixed medium (i.e., water and ethanol), and thereby controlling a reaction rate, a particle growth rate, the crystallinity, the dispersibility of produced fine particles, and the like. For example, barium titanyl oxalate as a source material is mixed into 100% ethanol, and the mixed medium is kept in supercritical conditions of 300°C and 20 MPa for over an hour, but little decomposition reaction occurs, and synthesis of barium titanate (BaTiO₃) cannot be made. On the other hand, when barium titanyl oxalate is mixed into supercritical water at 400°C and 30 MPa, barium titanate can be produced in just one second. According to the characteristics, by increasing the water ratio, a rate of organic decomposition can be accelerated, and thus it is possible to produce barium titanate fine particles and the like at high speed. Furthermore, a maximum value of the ion product for high-temperature and high-pressure water [H⁺][OH⁻] becomes about 10⁻¹¹ at a temperature zone of 200°C to 300°C, and a decomposition ability of water is maximized, and also it is possible to accelerate an ionic reaction. Moreover, as shown in Figs. 1A and 1B, as long as the mole fraction of ethanol is about 30% or more, the mixed medium of water and ethanol can have critical conditions much lower than those of pure water of about 300°C or less and 10 to 11 MPa while keeping the sufficient decomposing ability.

If the ethanol ratio is increased, the critical temperature Tm and the critical pressure Pm of the mixed medium can be further decreased, a decomposition rate (a reaction rate) or a rate of producing fine particles can be slowed down, and the handling is facilitated thereby improving the operability. Furthermore, the critical temperature and the critical pressure are further decreased, and the temperature and pressure conditions are relaxed, so that it is possible to reduce an occurrence of corrosion in a reaction container. For example, by the increase of the ethanol ratio, the critical temperature of the mixed medium can be decreased from 374°C to about 260°C, and the critical pressure can be decreased from 22 MPa to about 6 to 7 MPa. As a result, for example, even when a reaction container or a pipe, which is made of Fe or Ni such as SUS or a corrosion-resistant hastelloy material, is used, its corrosivity is weakened, and an impurity content of a product is reduced. Or, the critical temperature and the critical pressure of the mixed medium are immediately decreased, for example, the critical temperature can be decreased to 300°C or less, and thus choices of materials of the reaction container and the like are broadened, so that it is possible to use highly corrosion-resistant Ti. Even when the ethanol ratio is increased, it is necessary to set up so that the mixed medium contains water definitely. If the mixed medium contains no water, the decomposing ability may be decreased, or the ionic reaction rate may be insufficient.

This is because even under the same temperature and pressure, the mixed medium of water and ethanol can provide a single-phase supercritical reaction environment state while maintaining the same decomposing ability as a simple subcritical water environment. Therefore, when the fine-particles synthesis method according to the present invention is applied to, for example, production of barium titanate fine particles, it is advantageous to produce barium titanate fine particles having a high particle uniformity, and high-crystallinity barium titanate nanoparticles can be produced without ex-post facto high-temperature sintering.

In addition, alcohol such as ethanol has a higher dispersion power with respect to fine particles than water, so that it is useful for dispersion of a source material and a product. For example, in a case of barium titanate fine particles synthesized with the use of supercritical water only, although primary particles are usually several tens of nanometers in diameter, some of them are aggregated in clusters with a submicrometer size. On the other hand, by making a supercritical reaction environment with an ethanol-added mixed medium, aggregated barium titanate fine particles are eliminated, and it is possible to synthesize dispersed barium titanate fine particles of several tens of nanometers in diameter almost. In other words, it is possible to prevent an aggregation of barium titanate fine particles from occurring. That is, in the supercritical reaction environment with the ethanol-added mixed medium, aggregated barium titanate fine particles can be eliminated, and it is possible to synthesize barium titanate fine particles of several tens of nanometers in diameter that the barium titanate fine particles are sufficiently dispersed.

A solvent to be mixed with water is not limited to ethanol, and any water-soluble organic solvents can be used as long as the solvents can decrease the critical temperature and the critical pressure more than pure water. As the solvent, for example, inexpensive alcohol having low toxicity (such as methanol, ethanol, propanol, isopropanol (IPA), and butanol) and ketones such as acetone can be used.

A reaction environment produced by a subcritical or supercritical mixed medium formed as described above, i.e., a subcritical or supercritical reaction environment created by the use of a mixed medium of water and a solvent of lower critical temperature and lower critical pressure than water, so that the mixed medium comes into a supercritical state at a lower temperature and a lower pressure than those in a case of water alone can be applied to, for example, a method for synthesizing barium titanate fine particles. As one example, the reaction environment is applied to JP-A No. 2003-261329 and JP-A No. 2005-289737. Titanium compound solution is mixed with barium salt solution, and after alkaline aqueous solution is added to the mixed medium, the mixed medium is subjected to thermal synthesis in the mixed medium in the subcritical or supercritical state, so that barium titanate fine particles can be produced. Specifically, source material titanium oxide and barium hydroxide are put in alcohol, and dispersed in supercritical alcohol, and then mixed with an accelerant containing water, so that barium titanate fine particles can be produced by the subcritical or supercritical mixed medium. If necessary, alkaline aqueous solution containing NaOH, TMAH (tetramethylammonium hydroxide) as an organic pH adjuster, or the like can be added to the mixed medium. Although TiO₂ powder as the source material is insoluble in water, nanometer-order particles can be easily produced, so that a slurry can be adjusted without pulverization of the fine particles. When Ba(OH)₂ as the source material is mixed into high-temperature and high-pressure water, Ba(OH)₂ is easily ionized. Thus, it is not necessary to pulverize Ba(OH)₂. To ensure a homogeneous reaction, before water and a source material are mixed, a source material slurry is preferably dispersed in supercritical alcohol. Furthermore, to adjust a ratio of Ba to Ti in barium titanate as a product, Ba:Ti in a starting material can be adjusted to around 1:1.

Moreover, the fine-particles synthesis method according to the present embodiment is not limited to the application to a system of metal oxide and hydroxide, and can be applied to chloride, nitrate salt, carbonate, organic acid salt, a composite metal compound source material. For example, the fine-particles synthesis method according to the present invention is not limited to JP-A No. 2003-261329 and JP-A No. 2005-289737, and can be applied to a novel method of producing barium titanate fine particles. The novel method of producing barium titanate fine particles is schematically described below. An organic metal complex containing barium and titanium is used as a starting material. The organic metal complex is supplied into a reaction environment of the subcritical or supercritical state created by a mixed medium, and remains in the reaction environment of a predetermined time, thereby producing barium titanate fine particles. Specifically, barium titanyl oxalate originally has barium and titanium at the 1:1 ratio within a short distance in the same molecule. When decomposed by the supercritical mixed medium, barium titanyl oxalate is crystallized by reacting in a molar ratio, and barium titanate fine particles can be produced. More specifically, the organic metal complex is completely decomposed by using the decomposition ability of the subcritical or supercritical mixed medium, and ions decomposed by the decomposition of the organic metal complex are crystallized into highly-crystalline barium titanate fine particles having a small particle diameter in nanometer order by thermal synthesis of the supercritical mixed medium in the reaction environment in the subcritical or supercritical state by the mixed medium as a reaction field.

In this manner, in the present embodiment, by using titanate oxide + barium hydroxide or organic metal complex containing barium and titanium as a starting material, there is no need to dissolve the material with a solvent, and the material in a state of a slurry can be used. Furthermore, a high degree of supersaturation can be achieved without constraints of the solubility like in JP-A No. 2003-261329 and JP-A No. 2005-289737, and nanoparticulation of barium titanate to be produced can be achieved. Moreover, organic metal complex powder containing barium and titanium originally has barium and titanium at a 1:1 ratio within a short distance in the same molecule. Therefore, immediately after decomposition of the organic metal complex, barium and titanium undergo a reaction at an equal mole ratio and crystallization, so that it is possible to produce barium titanate having a high inversion rate. Furthermore, the organic metal complex as a source material is continuously subjected to two-stage process of a decomposition process and a synthesis process by crystallization. Thus, unlike in a case where ionic organic metal complex is directly thrown in, a reaction rate is not too fast, so that it is possible to ensure a reaction time enough to increase the crystallinity.

As the organic metal complex containing barium and titanium used as the starting material, carboxylate containing barium and titanium (particularly, barium titanyl carboxylate), barium titanyl glycolate, and the like can be used. Of barium titanyl carboxylate, barium titanyl oxalate or barium titanyl citrate with a ratio of Ba:Ti = 1:1 is preferred. Considering ready availability, a cost of a source material, a low CO₂ content, and the like, barium titanyl oxalate BaTiO(C₂O4)₂·4H₂O is the optimum. In the present embodiment, barium titanyl oxalate is used. To adjust a ratio of Ba:Ti in barium titanate (BaTiO₃) as a product, a ratio of Ba:Ti in the starting material can be adjusted to around 1:1 appropriately.

For example, in a case of barium titanyl oxalate, by supplying barium titanyl oxalate to a reaction environment of a subcritical mixed-medium or supercritical mixed-medium state to cause barium titanyl oxalate to remain therein, barium titanyl oxalate, including organic elements of a barium titanyl oxalate source material, is completely decomposed in a few seconds to a few minutes. After that, though the synthesis, barium titanate fine particles can be produced. As a result, not only a batch production process with an autoclave but also a mass-productive continuous-flow production process can be used. Therefore, it is possible to improve an efficiency of production process of barium titanate fine particles drastically.

### First Embodiment

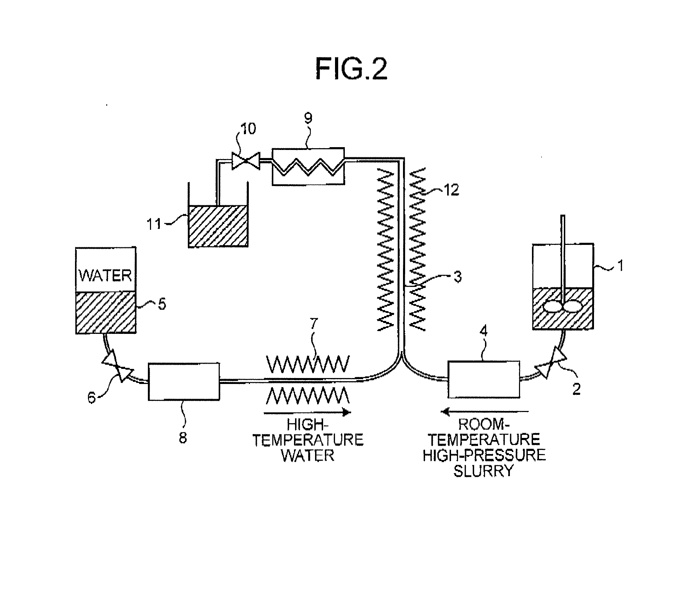

A first embodiment shows an example of application to a method for producing barium titanate fine particles by employing a continuous-flow production process making it easy to create a supercritical state. Fig. 2 is a schematic configuration diagram schematically-showing continuous-flow production equipment applied in the first embodiment. The continuous-flow production equipment includes the slurry pump 4 that supplies a slurry supplied from the slurry agitator 1, which agitates a slurry containing a source material, via the valve 2 as a room-temperature high-pressure slurry to the reaction tube 3 composing a reaction field; the liquid feed pump 8 that supplies pure water supplied from the tank 5 via the valve 6 to the reaction tube 3 as high-temperature water after the pure water is heated by the heater 7 with the high-temperature water mixed with the room-temperature high-pressure slurry; the cooling bath 9 that is arranged on the outlet-side of the reaction tube 3; and the collection tank 11 that is jointed to the outlet-side of the cooling bath 9 via the valve 10. The continuous-flow production equipment further includes the heater 12 for heating the reaction tube 3 to put inside thereof into a supercritical state (or a subcritical state). The heater 12 surrounds the reaction tube 3.

In the example of the continuous-flow production equipment shown in Fig. 2, it is configured to flow a fluid from the lower side to the upper side. Alternatively, two lines of the high-temperature water and the room-temperature high-pressure slurry to be provided on the upstream side can be installed on top of the reaction tube 3 so as to flow a fluid from the upper side to the lower side. Furthermore, as for a size of the reaction tube 3, for example, in Example 2 to be described later, a pipe having an inside diameter of 8 mm is used; however, commercially available pipes of 1/32 inch up to a few centimeters in diameter can be used as the reaction tube 3. Moreover, in the example shown in Fig. 2, a flow path is configured that the line of the high-temperature water and the line of the room-temperature high-pressure slurry are combined. When a reaction time is long, for example, it takes around a few minutes, the flow path can be configured that the line of the high-temperature water side is omitted, and only a prepared slurry that water or a solvent is mixed with a reactant is flown into the reaction tube 3. Furthermore, it is preferable that the production equipment puts the line of a source material slurry into high-temperature and high-pressure conditions, and then mixes the source material slurry with high-temperature high-pressure water. In this manner, the slurry is also put into the high-temperature and high-pressure conditions, so that there is little or no need for the slurry to be heated with water or a mixed medium of water and a solvent, and a mixing ratio of the source material slurry to the water can be 1:1 or more. Consequently, it is possible to increase a concentration of the source material at a reaction site, and also possible to improve the productivity.

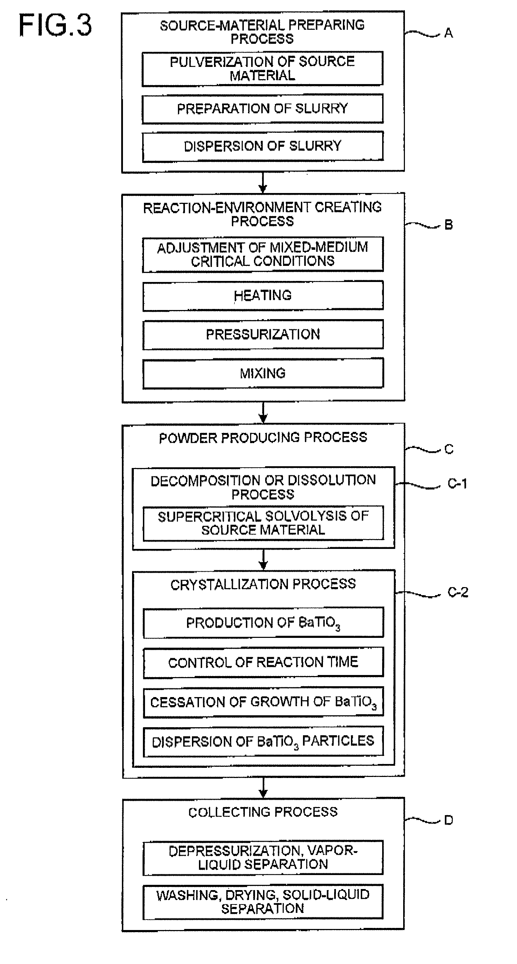

Subsequently, the method for producing barium titanate fine particles according to the first embodiment is explained below. Fig. 3 is a schematic process chart illustrating the barium titanate producing method with the continuous-flow production equipment as shown in Fig. 2.
A. Source-material preparing process

First, a source-material preparing process is performed. In the source-material preparing process, a source material is prepared, and processes of pulverization of the source material, preparation of a slurry, and dispersion of the slurry are sequentially performed.

In the source-material pulverizing process, to cause the source material to be easily fed from the slurry pump 4, source material particles are pulverized to be around a few µm in size by any of ball milling, bead milling, and planetary milling. To reduce variations among products, it is preferable that the source material particles are further pulverized to be submicron size. In the first embodiment, commercially available submicron TiO₂ powder is used as the source material, so that it is not necessary to perform the pulverizing process. When barium titanyl oxalate is used as the source material, source material particles are pulverized by the following process. As a pulverizing method, a wet ball milling method using zirconia as a ball, ion-exchange water as a solvent, and ethanol as a polar solvent can be employed. A milling time shall be 24 hours, a volume ratio of source material, ball, and solvent shall be 1:4:8, a pot capacity of the ball mill shall be 700 mL, a volume fraction of content to the pot shall be over 70%, a size of the source material powder before being pulverized shall be about 70 µm on an average, and a size of the source material powder after being pulverize shall be about 0.5 µm on an average.

In the preparing process of a barium titanyl oxalate slurry, a concentration of powder in the slurry shall be, for example, 25 g/L. As a condition for stability of barium titanate, an alkaline atmosphere of pH>12 is required, so that a pH is adjusted by the addition of alkaline aqueous solution (electrolyte addition, or alkaline water or ammonia water). In the first embodiment, NaOH is added. Although a concrete additive amount of NaOH depends on an amount of CO₂ contained in the source material, for example, when barium titanyl oxalate is used as the source material, only as a guide, a ratio of NaOH to CO₂ is set to be larger than 2:1. This is to prevent formation of BaCO₃. When TiO₂ and Ba(OH)₂ are used as the source materials, an alkaline agent is not added to the slurry, or a pH adjuster such as NaOH or TMAH can be added to the slurry.

In the dispersing process of the slurry, the slurry is dispersed by ultrasonic waves for about 5 to 10 minutes before the slurry undergoes the reaction. At the time of reaction process, the slurry is fed to the side of the slurry pump 4 while being agitated by the slurry agitator 1.
B. Reaction-environment creating process

A reaction-environment creating process is a process of creating a reaction environment in a subcritical mixed medium or supercritical mixed-medium state, and processes of adjustment of mixed-medium critical conditions, heating, pressurization, and mixing are performed.

In the adjusting process of mixed-medium critical conditions, a ratio of water to a solvent (ethanol) is adjusted. In this case, in percent by weight, an amount of water shall be 5wt% to 95wt%. Consequently, the critical temperature of the mixed medium is adjusted to 260°C to 370°C, and the critical pressure is adjusted to 8 MPa to 22 MPa.

In the heating process, pure water is heated by the heater 7 to bring into high-temperature water. Furthermore, the reaction tube 3 in which the high-temperature water and the slurry containing the organic solvent (such as ethanol) are mixed is heated above the adjusted critical temperature of the mixed medium by the heater 12.

In the pressurizing process, the slurry, containing the source material and the organic solvent (such as ethanol), supplied from the slurry agitator 1 is pressurized above around the adjusted critical pressure of the mixed medium by the slurry pump 4, and the source material slurry is supplied as a room-temperature high-pressure slurry to the side of the reaction tube 3.

In the mixing process, the high-temperature high-pressure water and the room-temperature high-pressure slurry are mixed, and the mixture is supplied to the reaction tube 3. In the mixed state, the reaction environment inside the reaction tube 3 is subject to being close to the critical conditions of the mixed medium, and is preferably in the supercritical state exceeding the critical temperature and the critical pressure.

Specifically, a minimum temperature capable of synthesizing tetragonal barium titanate is greater than 215°C, a minimum pressure is greater than 5 MPa, and when barium titanyl oxalate is used as the source material, a pH indicating the alkaline atmosphere is greater than 12 to 14. Therefore, to improve the tetragonality, as the reaction environment inside the reaction tube 3, the temperature and pressure are preferably higher than the critical conditions of the mixed medium.
C. Powder producing process

A fine-particles producing process is a process of producing barium titanate fine particles by making the slurry containing barium titanyl oxalate remain in the reaction tube 3 created as the reaction environment in the supercritical mixed-medium state (or the subcritical mixed-medium state) for a predetermined time, and a decomposition or dissolution process and a crystallization process are continuously performed.
C-1. Decomposition or dissolution process

In the decomposition or dissolution process, by supplying the slurry containing a reactant (such as metal oxide, hydroxide, or organic metal complex) to the reaction environment of the supercritical mixed-medium state (or the subcritical mixed-medium state) in the reaction tube 3, reactant components are decomposed or dissolved by supercritical solvolysis. More specifically, for example, when TiO₂ + Ba(OH)₂ is used as the source material, reactant components are dissolved as ions, such as Ba⁺², TiO₂ hydrate, Ti(OH)₄ hydrate, Ti(OH)₃⁺¹, or Ti(OH)₅⁻¹. Furthermore, to take oxalate as an example, due to decomposition force caused by a severe collision of molecules and the subcritical mixed medium or the supercritical mixed medium, a complex molecular structure is completely destroyed. For example, titanium oxide becomes Ti(OH)₄(aq) or ions, such as Ti(OH)₃⁺¹ or Ti(OH)₅⁻¹, and organic components of oxalate is completely decomposed to a level of a simple molecule, such as CO, CO₂, or H₂O. Then, the decomposed components, such as Ti and Ba, are dissolved in the subcritical mixed medium or the supercritical mixed medium. As a result, decomposed inorganic components reach a high saturation (a degree of supersaturation). In other words, TiO₂, Ba(OH)₂, barium titanyl oxalate, which are powdered, are used as the source materials, so that when they are decomposed to the subcritical mixed medium or the supercritical mixed medium, a high degree of supersaturation can be easily achieved locally, and thus it is suitable for use in downsize of produced barium titanate fine particles to nanoparticles. A time required to perform the decomposition or dissolution process varies depending on temperature, pressure, and a type of reactant.
C-2. Crystallization process

In the crystallization process, after barium titanyl oxalate is decomposed, the slurry is further remained in the reaction environment in the subcritical mixed-medium or supercritical mixed-medium state in the reaction tube 3 as a reaction field for a predetermined reaction time, and nucleation of barium titanate is induced to undergo crystallization by performing a thermal synthesis process of the supercritical mixed medium, in which ions containing decomposed Ba and Ti are synthesized, and thereby producing highly-crystalline barium titanate having a particle diameter in nanometer order.

At this time, the time remaining in the reaction tube 3 composing the reaction field (i.e., a reaction time) is adjusted/controlled. In the crystallization process, under a condition that conditions of temperature and pressure bringing into the subcritical mixed-medium or supercritical mixed-medium state as described above are both met, it is necessary to cause the slurry to remain in the reaction tube 3 for at least a few seconds or more. Furthermore, to obtain a higher crystallinity, it is preferable that the slurry be remained in the subcritical mixed-medium or supercritical mixed-medium state for more than a few seconds, and stably crystallized. Not to be subject to the limitation of the length of the reaction tube (i.e., not to be too long), and also, not to grow to over a particle diameter in a desired size, the reaction time is preferably within several tens of seconds. Consequently, highly-crystalline barium titanate in an optimum size of about 50 nm to 150 nm is produced. As for barium titanate, about 50 nm to 150 nm is regarded as the optimum size to have the highest relative permittivity. It is known that if the size is too smaller or too larger than the optimum size, the relative permittivity of barium titanate fine particles tends to decrease.

The reaction time to have the slurry remain for controlling the crystallinity and particle diameter of barium titanate is controlled by an adjustment of a tube diameter or a length of the reaction tube 3, an adjustment of a flow rate by adjusting the pumps 4, 8 or the valves 2, 6, or an adjustment of a timing of sudden cooling for terminating the reaction.

The cessation of growth of barium titanate (BaTiO₃) particles is made by sudden cooling with the cooling bath 9. A cooling rate is fast, for example, more than about 30°C/sec, and the barium titanate particles are cooled to room temperature. Furthermore, because of excellent dispersion characteristics of the organic solvent in the supercritical mixed medium, the produced barium titanate particles are rapidly flown into the supercritical mixed medium and spread therein, and thereby dispersing the barium titanate particles. In this manner, by reducing the contact between the particles immediately after being produced, particle aggregation can be prevented. When the prevention of particle aggregation after the crystallization process is emphasized, a mixing ratio is adjusted so as to increase a ratio of the organic solvent in the mixed medium.
D. Collecting process
   In the collecting process, the pressure is reduced to atmospheric pressure by the valve 10, vapor is emitted thereby performing vapor-liquid separation, and the slurry is collected in the collection tank 11. The collected slurry is washed with ion-exchange water to remove an additive Na. Furthermore, the slurry is separated into barium titanate powder and liquid by high-speed centrifugation of at least several thousand revolutions per minute or more. Moreover, a pH adjustment is performed repeatedly until the barium titanate powder is neutralized, and then the barium titanate powder is dried at about 100°C by a drier. Eventually, barium titanate fine particles are obtained.

In the present embodiment, ethanol composing the mixed medium is mixed into the slurry together with the ion-exchange water, but not limited thereto. For example, ethanol can be mixed with water in the high-temperature water supply line. Alternatively, it may be configured that, instead of water, ethanol alone is supplied toward the reaction tube 3; on the other hand, water is mixed into the slurry, and the slurry is supplied toward the reaction tube 3, so that ethanol and water can be mixed in the reaction tube 3 as the mixed medium. In either case, all it takes is to be in a state where a mixing ratio of water and ethanol is identified. Furthermore, all it takes is that the mixed medium is in the subcritical or supercritical state at least in the reaction tube 3. According to the reference document 1 described above, if the temperature is about 350°C or less, ethanol is not decomposed by supercritical water. In an actual experiment, it was found that the mixed medium according to the present invention can be produced at temperatures of 400°C to 500°C because a hydrolysis rate of ethanol is low.

### Second Embodiment

When a source material slurry prepared the addition of water is preheated, a hydrothermal reaction takes place in the source material slurry. Consequently, in a conventional flow supercritical reaction, by mixing high-temperature water into a room-temperature source material slurry, a supercritical reaction environment is rapidly achieved. However, to bring the slurry into a supercritical state by mixing the high-temperature water into the slurry like this, about several times more amount of the high-temperature water than that of the room-temperature source material slurry is required. In other words, to bring into the supercritical state, there is a limit on a ratio of the mixable source material slurry to the high-temperature water. Therefore, there is a limit on an amount of the synthesizable source material. On the other hand, a source material slurry prepared the addition of an organic solvent such as alcohol is very slow in reaction rate, as compared with a fast reaction of high-temperature high-pressure water and a source material, even in the supercritical state unless the slurry contains water. According to the present invention, with a difference between the reaction rates, after heat and pressure are applied to a source material slurry containing no water to have a target temperature and a target pressure, the source material slurry is mixed with an accelerant containing water to be reacted. In this manner, by preheating the source material slurry, there is little or no need for the source material slurry to be heated with high-temperature water, so that it is possible to improve an amount of the source material slurry greatly as compared with that is in the conventional supercritical flow reaction. As a result, it can be applied to a mass-productive continuous-flow production process, and an efficiency of the process of producing barium titanate fine particles can be improved significantly.

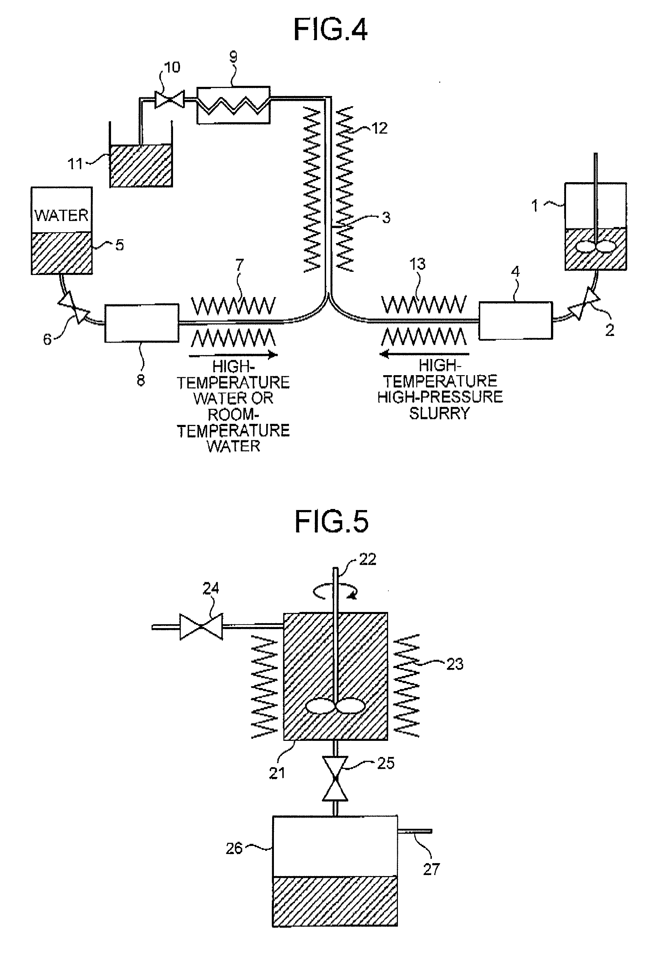

The following shows, as a second embodiment, an example of application to a method for producing barium titanate fine particles by employing a continuous-flow production process making it easy to create a supercritical state. Fig. 4 is a schematic configuration diagram schematically-showing continuous-flow production equipment applied in the present embodiment. The continuous-flow production equipment includes the heater 13 that produces a high-temperature slurry by heating a slurry supplied from the slurry agitator 1, which agitates a slurry containing a source material, via the valve 2; the slurry pump 4 that supplies the high-temperature slurry, which is produced by the application of heat by the heater 13, as a high-pressure high-temperature slurry to the reaction tube 3 composing a reaction field; the heater 7 that produces high-temperature water by heating pure water supplied from the tank 5 via the valve 6; the liquid feed pump 8 that mixes the high-temperature water, which is produced by the application of heat by the heater 7, with the high-temperature high-pressure slurry, and supplies the mixture to the reaction tube 3; the cooling bath 9 that is arranged on the outlet-side of the reaction tube 3; and the collection tank 11 that is jointed to the outlet-side of the cooling bath 9 via the valve 10. The continuous-flow production equipment further includes the heater 12 for heating the reaction tube 3 to put inside thereof into a supercritical state (or a subcritical state). The heater 12 surrounds the reaction tube 3.

In the example of the continuous-flow production equipment shown in Fig. 4, it is configured to flow a fluid from the lower side to the upper side. Alternatively, two lines of the high-temperature water and the high-temperature high-pressure slurry to be provided on the upstream side can be installed on top of the reaction tube 3 so as to flow a fluid from the upper side to the lower side. Furthermore, as for a size of the reaction tube 3, for example, commercially available pipes of 1/32 inch up to a few centimeters in diameter can be used as the reaction tube 3.

When the source material slurry is not heated, to make a fluid after mixing have a high-temperature and a high-pressure, supercritical water is heated to a temperature higher than the critical condition (for example, a temperature higher than the critical temperature by 200°C to 300°C), a mixing ratio between the supercritical water and the source material slurry has to be set that a ratio of the supercritical water is larger than that of the source material slurry, i.e., the preheated supercritical water of a larger amount than that of the source material slurry has to be mixed with the source material slurry. For example, to exceed the supercritical condition of water, a mixing ratio of the supercritical water to the source material slurry needs to be set at about 4:1 or more. Consequently, a concentration of the source material in the fluid after mixing is lowered. On the other hand, by making the slurry to be supplied to the reaction tube 3 have a high-temperature and a high-pressure by the heater 13, there is little or no need for the slurry to be heated with water (supercritical water), so that a mixing ratio of the source material slurry to the water can be set at 1:1 or more, i.e., an amount of the source material slurry can be larger than that of the water. In a case when a mixed solution of water and a solvent is supplied from the side of the liquid feed pump 8, similarly, a mixing ratio of a source material slurry to the mixed solution can be set at 1:1 or more. That is, it can be set that (a volume flow of a whole slurry containing a source material (a metal salt source material) (cc/min))/(a volume flow of water (or a mixed solution) containing no source material) ≥ 1. Consequently, it is possible to increase a concentration of the source material at a reaction site, and also possible to improve the productivity.

Furthermore, in the example shown in Fig. 4, it is configured that water is heated by the heater 7. However, the present invention is not limited to this configuration, and it can be configured that water having a room temperature, i.e., room-temperature water is supplied to the reaction tube 3 without heating the water. The source material slurry can be made to have a high temperature, and a ratio of water to be mixed can be reduced, and thus even when water supplied to the reaction tube 3 is room-temperature water, it is possible to bring inside the reaction tube 3 into the subcritical or supercritical state.

The method for producing barium titanate fine particles according to the second embodiment is basically the same producing method as in the first embodiment except for a point that a slurry is heated in the reaction-environment creating process. Things specific to the method for producing barium titanate fine particles according to the second embodiment are explained below.

Also, when the continuous-flow production equipment shown in Fig. 4 is used, first, as a source-material preparing process, a source material as described above is prepared, and processes of pulverization of the source material, preparation of a slurry, and dispersion of the slurry are performed. Next, as a reaction-environment creating process, a reaction environment in a subcritical mixed medium or supercritical mixed-medium state is created, and processes of adjustment of mixed-medium critical conditions, heating, pressurization, and mixing are performed. In the heating process, a slurry is heated by the heater 13 to bring into a state of a high-temperature slurry. Furthermore, pure water is heated by the heater 7 to a state of high-temperature water. Moreover, the reaction tube 3 in which the high-temperature water and the slurry containing the organic solvent (such as ethanol) are mixed is heated above the adjusted critical temperature of the mixed medium by the heater 12.

In the pressurizing process, the slurry, containing the source material and the organic solvent (such as ethanol), supplied from the slurry agitator 1 is pressurized above the critical pressure of the organic solvent by the slurry pump 4, and heated as described above so as to supply the source material slurry as a high-temperature high-pressure slurry to the side of the reaction tube 3. Furthermore, the pure water is also pressurized by the liquid feed pump 8, and heated by the heater 7 so as to supply the pure water as high-temperature high-pressure water to the side of the reaction tube 3. Instead of the heated pure water, room-temperature high-pressure water can be used.

In the mixing process, the high-temperature high-pressure water and the high-temperature high-pressure slurry are mixed, or the room-temperature high-pressure water and the high-temperature high-pressure slurry are mixed, and supplied to the reaction tube 3. In the mixed state, the reaction environment inside the reaction tube 3 is subject to being close to the critical conditions of the mixed medium, and is preferably in the supercritical state exceeding the critical temperature and the critical pressure.

In this manner, the reaction environment is created in the reaction-environment creating process, and the above-described fine-particles producing process and collecting process are performed, so that barium titanate fine particles can be produced.

In the present embodiment, as a fluid mixed with a slurry in the reaction tube (reaction region) 3, any accelerant can be used as long as the accelerant contains at least water that accelerates the synthesis of fine particles. As described above, the accelerant can be a mixed medium with ethanol (an organic solvent) or a mixed medium with another solvent unrelated to the reaction. In the reaction tube 3 in which the slurry and the accelerant are mixed, it has to be in the subcritical or supercritical state. Moreover, if the slurry contains no water, the slurry can contain a fluid. In the present embodiment, the source material slurry is preferably in a condition that crystallization water contained in the source material slurry or water contained in alcohol is small in amount. A reactant containing crystallization water, such as Ba(OH)₂·2H₂O or Ba(OH)₂·8H₂O, and commercially available alcohol of about 99% or more can be used.

In this manner, the slurry supplied from the slurry agitator 1, which agitates the slurry containing no water, is supplied as a high-temperature high-pressure slurry to the reaction tube 3 composing the reaction field via the valve 2, the slurry pump 4, and the heater 13. In this manner, by supplying the slurry heated to the high temperature to the reaction field, the slurry can be put into the subcritical or supercritical state without being heated with water mixed with the slurry. Consequently, synthesis of fine particles can be carried out on a condition of a higher ratio of the solvent or a higher concentration of the source material, i.e., on a condition of a lower ratio of water mixed with the slurry. Furthermore, basically, it is not necessary to heat the slurry with water, and thus water does not have to have a high temperature. Moreover, to put the slurry into the subcritical or supercritical state, it is not necessary to heat the slurry with a large amount of high-temperature water. Thus, it is possible to lower the temperature of water supplied to the reaction tube. Furthermore, the pipe used to supply water is heated to a high temperature, and thus is possible to prevent the pipe from corrosion and the like.

Furthermore, even when the slurry is heated and put into the subcritical or supercritical state, a reaction (decomposition of the source material or production of particles) does not proceed because a reaction rate (a rate of decomposition of the source material and production of particles) is slow in a state where the slurry does not contain water. Consequently, even when the slurry is heated in advance, basically, synthesis of fine particles does not proceed. After the slurry is mixed with water in the reaction tube 3, and put into the subcritical or supercritical state, fine particles are synthesized and produced. In the above embodiment, a case where barium titanate is synthesized and produced is described. The present embodiment can be used as a method for the synthesis of various metal-oxide nanoparticles other than barium titanate, for example, a method for the synthesis of ferrite, a piezoelectric material, a positive-electrode material of a lithium secondary battery, a fluorescence substance, and the like.

For example, fine particles of a dielectric substance, ferrite, a positive-electrode material of a lithium secondary battery, a fluorescence substance, and the like can be synthesized by using a conventional supercritical hydrothermal synthesis method. When these various fine particles are synthesized, in the same manner as above, by the application of the method according to the present invention, nanoparticles having better characteristics can be produced. More specifically, as an example of synthesis of dielectric nanoparticles, besides BaTiO₃, there are SrTiO₃, (Ba,Sr)TiO₃, (Ba,Ca)TiO₃, (Ca_{0.25}Cu_{0.75})TiO₃. Furthermore, the present invention can be applied to the synthesis of LiCoO₂ or LiFePO₄ as the positive-electrode material of the lithium secondary battery and the synthesis of BaO·6Fe₂O₃ or the like as the synthesis of ferrite nanoparticles.

### Third Embodiment

A third embodiment shows an example of application to a method for producing barium titanate fine particles by employing a mass-productive batch production process with an autoclave. In the continuous-flow method, if large equipment is used, there are limitations on features of the slurry pump 4, the liquid feed pump 8, the heater 7, and the like. Therefore, the batch method according to the third embodiment is suited to the mass production. Fig. 5 is a schematic configuration diagram schematically-showing batch production equipment applied in the present embodiment. The batch production equipment is composed mainly of an autoclave 21 as a reaction container where a slurry containing a source material is supplied and a reaction environment is created. The autoclave 21 includes the agitator 22 and the heater 23. The agitator 22 agitates a slurry supplied. The heater 23 applies heat and pressure so as to put inside the autoclave 21 into a supercritical state (or a subcritical state). Furthermore, the valve 24 for communication with atmosphere is provided on the upper side of the autoclave 21, and a collection tank 26 is jointed to the bottom side of the autoclave 21 via the valve 25. The collection tank 26 has the exhaust port 27.

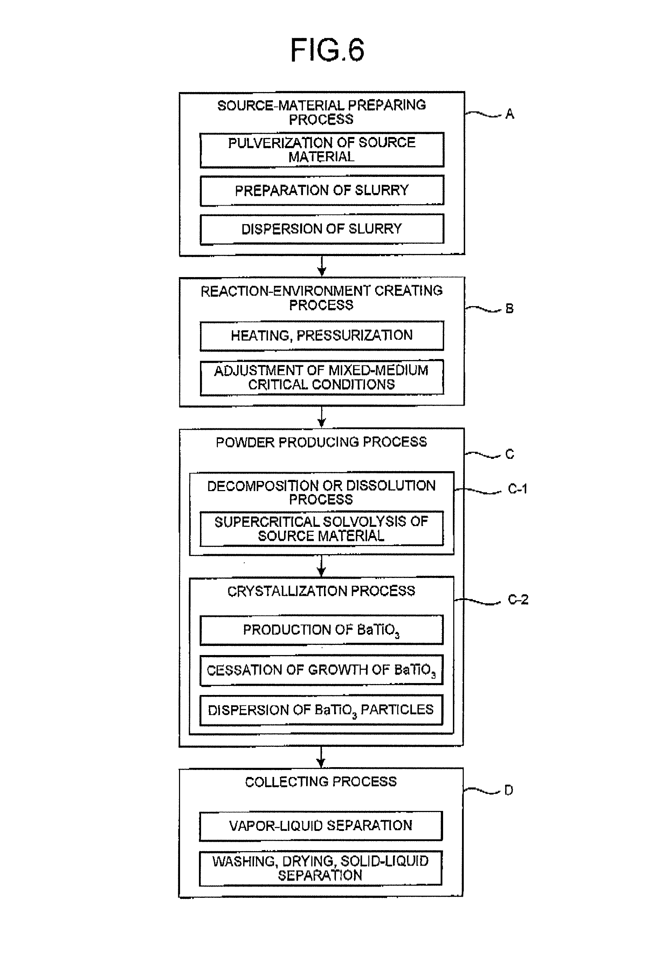

Subsequently, the method for producing barium titanate fine particles according to the third embodiment is explained below. Fig. 6 is a schematic process chart illustrating the barium titanate producing method with the batch production equipment as shown in Fig. 5. Detailed description of processes identical to those in the producing method illustrated in Fig. 3 is omitted.
A. Source-material preparing process
   A source-material preparing process is performed in the same manner as shown in Fig. 3. However, as for dispersion of a slurry, dispersion with ultrasonic waves is performed for about 5 to 10 minutes before the slurry undergoes a reaction, and after the slurry containing the source material is supplied into the autoclave 21, a dispersion process is performed by agitation of the agitator 22.
B. Reaction-environment creating process
   A reaction-environment creating process is a process of creating a reaction environment in a subcritical mixed medium or supercritical mixed-medium state, and processes of heating, pressurization, and adjustment of mixed-medium critical conditions are performed.
   In the heating and pressurization processes, in a state where the slurry containing the source material and an organic solvent (such as ethanol) is supplied into the autoclave 21, the autoclave 21 is heated to above a critical temperature of a mixed medium by the heater 23, and thereby creating a reaction environment in the subcritical mixed medium or supercritical mixed-medium state in the autoclave 21. The pressurization in this case is pressurization by heating, and the slurry is pressurized to above a critical pressure of the mixed medium. The pressure to be applied is adjusted based on a heating temperature and a filling fraction of the slurry. The filling fraction of the slurry shall be set more than about 10% of a volume of the autoclave 21. Furthermore, the adjustment of mixed-medium critical conditions is identical to that is explained in the reaction-environment creating process by the continuous-flow method.
C. Fine-particles producing process
   A fine-particles producing process is a process of producing barium titanate fine particles by causing the slurry containing barium titanyl oxalate to remain in the autoclave 21 as a reaction container created as the reaction environment in the supercritical mixed-medium state (or the subcritical mixed-medium state) for a predetermined time, and includes and a process of decomposition or dissolution and a process of crystallization. The process of decomposition or dissolution in this case is identical to that is in the continuous-flow method explained in Fig. 3.
   In the crystallization process, after barium titanyl oxalate is decomposed, the slurry is further remained in the reaction environment in the subcritical mixed-medium or supercritical mixed-medium state in the autoclave 21 as a reaction field for a predetermined reaction time, and nucleation of barium titanate is induced to undergo crystallization by performing a thermal synthesis process of the supercritical mixed medium, in which ions of decomposed barium titanyl oxalate are synthesized, and thereby producing highly-crystalline barium titanate having a particle diameter in nanometer order. A temperature rising rate at this time shall be more than 10°C/min, and the reaction field shall reach a supercritical mixed-medium state at the maximum temperature and pressure within several tens of minutes of a temperature rising time. Furthermore, the produced particles are rapidly flown into the supercritical mixed medium and spread therein to reduce the contact between the particles immediately after being produced, and thereby preventing particle aggregation.
   The cessation of growth of barium titanate particles is made by sudden depressurization. The depressurization is caused in such a manner that after the reaction field reaches the maximum temperature and pressure, barium titanate and the like are not remained in the reaction field of the autoclave 21, but ejected from the autoclave 21 by opening the valves 24 and 25. A depressurization rate in this case shall be within a few seconds to a few minutes (for example, 1 MPa/sec) to reduce the pressure up to atmospheric pressure. Furthermore, a cooling temperature shall be below about 100°C.
D. Collecting process
   In the collecting process, the pressure is reduced to atmospheric pressure, and vapor is emitted from the autoclave 21 thereby performing vapor-liquid separation, and the slurry is collected in the collection tank 26. Washing, drying, and solid-liquid separation of the collected slurry are performed in the same manner as in the continuous-flow method. Eventually, barium titanate fine particles are obtained.

### Fourth Embodiment

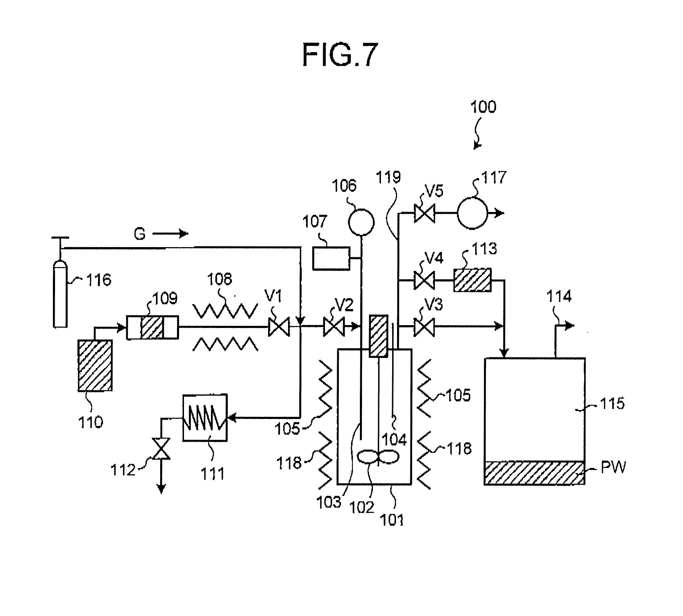

As a fourth embodiment, an example of application to a method for producing barium titanate fine particles with batch production equipment shown in Fig. 7 through a mass-productive batch production process with an autoclave is shown below. Fig. 7 is a schematic configuration diagram schematically-showing batch production equipment applied in the fourth embodiment of the present invention (i.e., is a schematic diagram showing a configuration example of batch production equipment capable of achieving a fine-particles synthesis method according to the present embodiment). Batch production equipment 100 shown in Fig. 7 implements a batch production process, and is suited to the mass production of barium titanate fine particles. The batch production equipment 100 is composed mainly of a reaction container 101 where a slurry containing a starting material is supplied and a reaction environment is created. The reaction container 101 includes the agitator 102 for agitating a slurry supplied; the heater (heating means) 105 that heats the reaction container 101 to put inside the reaction container 101 into a reaction environment in a supercritical state (or a subcritical state), and raises a temperature by the application of heat; the cooler 118 that cools the slurry in the reaction container 101; and the thermometer 104 that measures a temperature inside the reaction container 101. The reaction container 101 is a so-called autoclave, and a pressure container capable of keeping inside thereof at high pressure. The cooler 118 can be provided on an as-needed basis.

The infusion path 103 is connected to the reaction container 101, and an accelerant in the tank 110 is infused in the reaction container 101 through the infusion path 103. The manometer 106 and the safety valve 107 are attached to the infusion path 103. The pressure in the reaction container 101 is measured by the manometer 106. Reaction conditions in the fine-particles synthesis method according to the present embodiment are monitored based on the pressure measured by the manometer 106. Furthermore, the back pressure valve 112 maintains the pressure in the reaction container 101 not to exceed a predetermined pressure when the accelerant is infused in the reaction container 101.

In the tank 110, accelerant used in the fine-particles synthesis method according to the present embodiment is accumulated. In the present embodiment, the accelerant is, for example, alkaline aqueous solution containing pure water or water. The tank 110 is connected to the infusion path 103 via the pump 109, the first valve v1, and the second valve V2. When the first valve V1 and the second valve V2 are opened, and the pump 109 is driven, the accelerant in the tank 110 (hereinafter, also referred to as water) is supplied into the reaction container 101 through the infusion path 103. The pressure of the back pressure valve 112 is adjusted to a target level to prevent the pressure in the tank 110 from exceeding the target level while the pump 109 is in operation. Furthermore, the heater 108 as an accelerant heating means is provided to an accelerant supply path. The accelerant to be supplied into the reaction container 101 is heated by the heater 108, and water at an elevated temperature is supplied into the reaction container 101.

The gas cylinder 116 is connected to the infusion path 103 via the second valve V2. The gas cylinder 116 is filled with inert gas (for example, Ar) G. The inert gas G in the gas cylinder 116 is supplied into the reaction container 101 if necessary when a source material and a solvent are thrown in the reaction container 101.

The discharge path 119 is connected to the reaction container 101. Gas or liquid in the reaction container 101, the slurry after the reaction, and the like are discharged through the discharge path 119. The third valve V3, the fourth valve V4, and the fifth valve V5 are connected to the discharge path 119. Furthermore, the collection container 115 is connected to the discharge path 119 via the fourth valve V4 and the filter 113. The collection container 115 is a container in which a product (fine particles) PW produced by the fine-particles synthesis method according to the present embodiment is collected. The exhaust path 114 is provided on the collection container 115, and gas inside the collection container 115 is discharged to the outside through the exhaust path 114.

One end of the third valve V3 is connected to the discharge path 119, and the other end is connected to a portion between an outlet of the filter 113 and an inlet of the collection container 115. When the reaction in the reaction container 101 is suspended, the third valve V3 is opened to lower the pressure in the reaction container 101 rapidly, and thereby rapidly blowing the slurry in the reaction container 101 out into the collection container 115. When the reaction is suspended, the fourth valve V4 can be opened. Alternatively, after the reaction container 101 is depressurized, the reaction container 101 can be cooled by the cooler 118, and fine particles as a product can be collected in the reaction container 101. One end of the fifth valve v5 is connected to the discharge path 119, and the other end is connected to an inlet of the vacuum pump 117. The vacuum pump 117 evacuates air in the reaction container 101 to the outside when the source material and the solvent are thrown in the reaction container 101. At this time, as described above, the inert gas G in the gas cylinder 116 can be supplied into the reaction container 101 if necessary.

Subsequently, the method for producing barium titanate fine particles with the batch production equipment shown in Fig. 7 is explained below. The method for producing barium titanate explained here can be achieved by the fine-particles synthesis method according to the present embodiment. With the fine-particles synthesis method according to the present embodiment, when barium titanate is produced by the batch production equipment 100, in the same manner as in the above-described production method according to the third embodiment shown in Fig. 6, barium titanate particles are produced by the following processes:
A. source-material preparing process, B. reaction-environment creating process, C. fine-particles producing process, and D. collecting process.

A. Source-material preparing process
   First, a source-material preparing process is performed. In the source-material preparing process, in the same manner as in the production method according to the third embodiment, a source material is prepared, and processes of pulverization of the source material, preparation of a slurry, and dispersion of the slurry are sequentially performed. In the process of dispersion of the slurry, the slurry is dispersed by ultrasonic waves for about 5 to 10 minutes before the slurry undergoes the reaction. After the slurry containing the source material is thrown in the reaction container 101 included in the batch production equipment 100 shown in Fig. 7, the dispersion process is performed by agitation of the agitator 102. In the source-material preparing process, a pulverized source material and the slurry can be thrown in the reaction container 101, and the two mixed in the reaction container 101 can be dispersed. When the slurry is thrown in the reaction container 101, air in the reaction container 101 is evacuated by the vacuum pump 117, and the reaction container 101 is filled with inert gas such as Ar from the gas cylinder 116 if necessary. In the pulverization process, the method described above can be employed. Furthermore, as described above, a pH adjuster can be added to the slurry if necessary.
   In the source-material preparing process, after the dispersing process of the slurry is performed, and the slurry is thrown in the reaction container 101, before an accelerant is thrown in the reaction container 101, conditions are adjusted to be above the supercritical conditions of the solvent, for example, ethanol, and a supercritical state of supercritical ethanol having a low surface tension is achieved. By agitation of supercritical alcohol, source material powder before the reaction is kept in a good dispersion state.
B. Reaction-environment creating process
   A reaction-environment creating process is a process of creating a reaction environment of the subcritical or supercritical state of a mixed medium of water as an accelerant and a solvent that reaches the subcritical or supercritical state at the lower temperature and pressure than those in a case of water alone. Water (pure water) having a high rate of reaction with the source material in the slurry is supplied from the tank 110 to the slurry in the reaction container 101, whose temperature and pressure are increased at least by the application of heat, and an environment of the subcritical or supercritical state of the mixed medium of water and the solvent is created.
   In the present embodiment, the pressure in the reaction container 101 is increased by heating the slurry in the reaction container 101. As a result, the pressure of the slurry is increased to a high pressure. In other words, both the temperature and pressure of the slurry in the reaction container 101 are increased by heating the slurry. However, the present invention is not limited to this technique. Alternatively, the pressure of the slurry can be increased to a high pressure with a means of mandatorily-pressurizing the slurry. For example, it can be configured that the slurry in the reaction container 101 is mandatorily pressurized to a high pressure with a pressurizing means such as a pump, and heated to a high temperature by the heater 105. In this way, the pressure can be changed without changing the temperature, so that it becomes easy to control the reaction conditions. In this manner, in the present embodiment, the pressure of the slurry in the reaction container 101 can be increased to a high pressure by the application of heat, or mandatory pressurization, or both the application of heat and the mandatory pressurization.
   The accelerant is the one containing at least water, or can be water alone. Furthermore, to adjust a pH, the accelerant can be the one that an alkalizing agent is added to water. Moreover, the accelerant can be supplied to the slurry while being agitated by the agitator 102. In this way, the accelerant can go through the whole slurry, and thus the reaction can be initiated rapidly.
   Depending on a liquid feeding ability of the pump 109, a heating ability of the heater 108, and an amount of water supplied to the reaction container 101, the subcritical state or the supercritical state of the mixed medium of water and the solvent in the reaction container 101 can be achieved within a few seconds to a few minutes. In the present embodiment, an amount of water supplied into the reaction container 101 is controlled by a liquid feeding speed and an infusion time of the pump 109. To control the pressure in the reaction container 101 to a target value when water is supplied into the reaction container 101, the back pressure valve 112 and the cooler 111 are provided. Furthermore, to prevent the pressure in the reaction container 101 from exceeding a safety pressure, the safety valve 107 is provided. Consequently, after water is supplied, the pressure in the reaction container 101 during the reaction process can be maintained at a predetermined pressure.
   When the slurry is composed of a solvent (ethanol in the present embodiment) alone, even in the reaction environment of the subcritical or supercritical state of the solvent, the reaction of producing barium titanate does not proceed, or even if the reaction proceeds, a rate of the reaction is extremely slow. Thus, in the fine-particles synthesis method according to the present embodiment, a slurry composed of a starting material and a solvent is at least heated, temperature and pressure are increased (a first process). In this way, after a preliminary reaction environment is created, water having a high rate of reaction with the starting material in the slurry is supplied to the slurry, and a reaction environment of a subcritical or supercritical state is created (a second process). In this way, by supplying water, a subcritical or supercritical state of the mixed medium is created at a burst. Then, by making the slurry containing a reactant remain in the created reaction environment for a predetermined time, the reaction of producing barium titanate from the reactant can proceed.
   In this manner, in the present embodiment, in the preliminary reaction environment, the reaction of producing barium titanate from the reactant is not initiated (or the extremely-slow reaction is initiated). Only by supplying water to the slurry, the subcritical or supercritical state of the mixed medium of the water and the solvent is created, and the reaction proceeds (or the reaction proceeds rapidly). Therefore, in the fine-particles synthesis method according to the present embodiment, a reaction environment in a subcritical or supercritical state can be created at a desired timing, and a reaction of producing barium titanate from a reactant can be initiated, and thus a reaction time can be easily controlled with high accuracy. As a result, it is possible to produce fine particles having a small particle diameter (in the present embodiment, barium titanate).

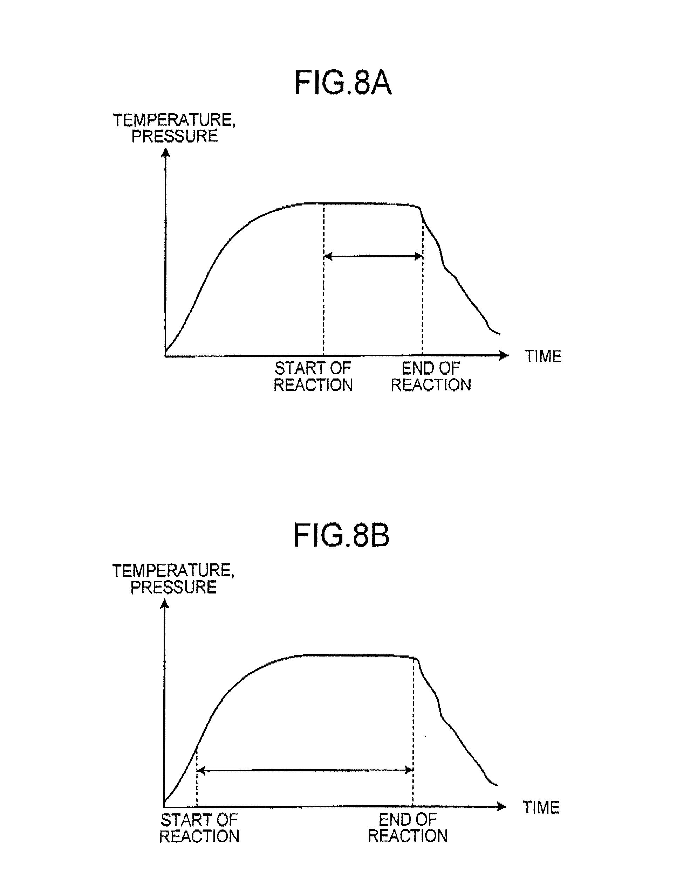

   Fig. 8A is a conceptual diagram showing changes in pressure and temperature in the fine-particles synthesis method according to the fourth embodiment. Fig. 8B is a conceptual diagram showing changes in pressure and temperature in a fine-particles production method employing the conventional batch hydrothermal synthesis method. When a subcritical or supercritical reaction environment is created by raising the temperature and pressure of a mixed medium of water and a solvent, as shown in Fig. 8B, while the temperature and pressure are on the rise, a reaction of producing barium titanate from a reactant is initiated. Furthermore, the temperature and pressure early in the reaction immediately lower than the temperature and pressure in the last half of the reaction. As a result, the temperature and pressure during the reaction vary greatly, produced barium titanate fine particles grow up, coarsening of particles and a decrease in crystallinity occur, and it becomes difficult to produce fine particles such as nanoparticles.
   On the other hand, in the fine-particles synthesis method according to the fourth embodiment, as described above, after a preliminary reaction environment is created, water is supplied to a slurry, and a reaction of producing barium titanate from a reactant is initiated. Consequently, as shown in Fig. 8A, the reaction can be initiated after the temperature and pressure of the slurry stabilized, and thus the reaction can proceed at the stable temperature and pressure. Therefore, it is possible to produce particles with small variations in size. As a result, it is possible to inhibit the growth of produced barium titanate fine particles, so that it is possible to produce fine particles such as nanoparticles. Furthermore, the reaction can be initiated by the supply of water, so that it becomes easy to control a reaction time, and the control of a particle diameter of powder to be produced can be relatively facilitated.
   At the creation of the preliminary reaction environment in the reaction container 101 before water is supplied thereto, it is preferable that in a state where a slurry containing a starting material and a solvent (ethanol) is supplied into the reaction container 101, the reaction container 101 be heated to above the subcritical temperature of the solvent composing the slurry by the heater 105. In this way, the solvent is brought into the supercritical state. In this case, the pressure rising of the slurry is caused through the heating, and the pressure of the slurry is increased to above the critical pressure of the solvent. The pressure is adjusted by a heating temperature and a filling fraction of the slurry. The filling fraction of the slurry shall be, for example, more than about 10% of a volume of the reaction container 101. The pressure in the reaction container 101 in the preliminary reaction environment (a preliminary pressure) is determined by an amount of slurry filling into the reaction container 101, a ratio of water (an accelerant) to the solvent, and the temperature.
   In the reaction-environment creating process, the solvent and the source material are homogeneously dispersed by the agitator 102 included in the reaction container 101. To create a better dispersion state, it is preferable that the temperature (a preliminary temperature) and the preliminary pressure in the preliminary reaction environment be above the critical conditions of the solvent. Furthermore, in the present embodiment, after water is supplied to the slurry in the preliminary reaction environment, a reaction environment of the subcritical or supercritical state of a mixed medium as a mixture of the water and the solvent has to be created immediately. Therefore, in the reaction-environment creating process, the temperature and pressure of the slurry are preferably adjusted to be close to target reaction conditions. Consequently, the reaction can proceed immediately.
   Moreover, in the reaction-environment creating process, it is preferable that the slurry be supplied into the reaction container 101 after water in the tank 110 is heated by the heater 108. In this way, a decrease in temperature of the slurry is prevented, and the temperature of the slurry can be increased depending on the temperature of the water, and thus the subcritical or supercritical state of the mixed medium of water and the solvent can be created more immediately, and the reaction can be easily controlled. When water is heated, the temperature of the water is preferably increased to a target reaction temperature. Consequently, after the water is supplied to the slurry, a mixture of the water and the slurry can be brought into the subcritical or supercritical state immediately.
   In the reaction-environment creating process, as described above, the mixture of the water and the slurry is preferably subject to being close to the critical conditions of the mixed medium, and more preferably, to being brought into the supercritical state exceeding the critical temperature and the critical pressure of the mixed medium. Particularly, the minimum temperature capable of synthesizing tetragonal barium titanate is larger than 215°C, and the minimum pressure capable of synthesizing tetragonal barium titanate is larger than 5 MPa. Thus, to improve the tetragonality of barium titanate to be produced, the reaction environment in the reaction container 101 preferably has higher temperature and pressure than the critical conditions of the mixed medium.
   The critical conditions of the mixed medium can be changed by adjusting a ratio of water to the solvent (ethanol). In the present embodiment, in percent by weight, an amount of water shall be 5wt% to 95wt%. Consequently, the critical temperature of the mixed medium is adjusted to 260°C to 370°C, and the critical pressure is adjusted to 8 MPa to 22 MPa. In the present embodiment, it is preferable that crystallization water contained in the source material or water contained in alcohol be small in amount. Practically, a reactant containing crystallization water, such as Ba(OH)2·8H₂O, and commercially available alcohol of about 99% can be used.
C. Powder producing process
   A fine-particles producing process is a process of producing barium titanate fine particles (powderparticles) by causing the slurry containing the reactant (such as metal oxide, hydroxide, or organic metal complex) to remain in the subcritical or supercritical reaction environment created by supplying the accelerant to the slurry and mixing the accelerant with the slurry for a predetermined time (a third process), and includes a process of decomposition or dissolution, a crystallization process, and a dispersion process.
C-1. Decomposition or dissolution process
   In the decomposition or dissolution process, by supplying the slurry containing the reactant (such as metal oxide, hydroxide, or organic metal complex) to the reaction environment of the supercritical mixed-medium state (or the subcritical mixed-medium state) in the reaction container 101, reactant components are decomposed or dissolved by supercritical solvolysis. As a result, decomposed inorganic components, such as Ti and Ba, reach a high saturation (a degree of supersaturation).
C-2. Crystallization process
   In the crystallization process, after barium titanyl oxalate is decomposed, the slurry is further remained in the reaction environment of the subcritical mixed-medium or supercritical mixed-medium state in the reaction container 101 as a reaction field for a predetermined reaction time, and nucleation of barium titanate is induced to undergo crystallization by performing a thermal synthesis process of the supercritical mixed medium, in which ions containing decomposed Ba and Ti are synthesized, and thereby producing highly-crystalline barium titanate having a particle diameter in nanometer order. The produced particles are rapidly flown into the supercritical mixed medium and spread therein, so that the contact between the particles immediately after being produced is reduced, and particle aggregation is prevented.
   If the produced barium titanate particles in nanometer order are retained for a long time on the spot, the particles may grow. To stop the growth of barium titanate, after it comes to the target reaction time, barium titanate and the like are not retained in the reaction field in the reaction container 101, and the temperature and pressure in the reaction container 101 are adjusted to be lower than the conditions bringing into the supercritical state. In the present embodiment, at least either one of the third valve V3 and the fourth valve V4 is opened, and a high-temperature high-pressure fluid is ejected from the reaction container 101 thereby depressurizing the reaction container 101 immediately, and thus the temperature and pressure in the reaction container 101 are lowered. In this way, with the third valve V3 and the fourth valve V4, the slurry in the reaction environment is cooled and depressurized, and thereby dissipating the reaction environment easily, and thus it is possible to stop the growth of the barium titanate particles. In this case, a depressurization rate is within a few seconds to a few minutes, which is enough to decrease the pressure in the subcritical or supercritical state to atmospheric pressure. In the present embodiment, just by opening the third valve V3 and the fourth valve V4 of the batch production equipment 100, the reaction can be stopped, and thus the reaction time can be controlled freely by any of the second, minute, and hour, and especially, it becomes easy to control a fast reaction. To stop the growth of the barium titanate particles, inside the reaction container 101 can be cooled by the cooler 118 so that the temperature and pressure in the reaction container 101 can be lower than the conditions bringing into the subcritical or supercritical state.
   The temperature in the reaction container 101 is decreased to about 100°C by the depressurization. When the subsequent collecting process is executed, it is preferable that the temperature in the reaction container 101 is further decreased to decrease the temperature of the slurry. Thus, in the present embodiment, the temperature of the slurry in the reaction container 101 is decreased by using the cooler 118. Consequently, it is possible to move on to the collecting process more immediately as compared with a case where the temperature of the slurry in the reaction container 101 is decreased naturally, and thus a time taken for the production process can be shortened, and the production efficiency can be improved.
   Because of excellent dispersion characteristics of the organic solvent in the supercritical mixed medium, the produced particles are rapidly flown into the supercritical mixed medium and spread therein, the contact between the particles immediately after being produced is reduced, and particle aggregation is prevented. When the prevention of particle aggregation after the crystallization process is emphasized, it is preferable that a ratio of the organic solvent in the mixed medium be adjusted to high.
D. Collecting process
   In the collecting process, the fourth valve V4 is opened, and only the fluid (liquid and vapor) in the reaction container 101 is spouted into the collection container 115 via the filter 113, and thereby releasing vapor in the collection container 115 through the exhaust path 114. When the fluid passes through the filter 113, a portion of powder having a smaller size than that is filtered by the filter 113 is moved into the collection container 115, and a large portion of the product powder is caused to remain in the reaction container 101 by valve operation. After the reaction container 101 is cooled to room temperature, the powder as the product is collected. At this time, to remove an additive from the powder, the collected powder is washed with ion-exchange water. Furthermore, the powder is separated into solid (barium titanate fine particles) and liquid by high-speed centrifugation of at least several thousand revolutions per minute or more. Moreover, a pH adjustment is performed repeatedly until the barium titanate fine particles are neutralized. After that, the barium titanate fine particles are dried at about 100°C by the drier. Eventually, the barium titanate fine particles can be obtained.

To collect barium titanate particles quickly, it can be configured to cause a fluid in the reaction container 101 not to pass through the filter 113. In this case, by opening the third valve V3, a large portion of content in the reaction container 101 is spouted into the collection container 115, and only a portion of the content is caused to remain in the reaction container 101. In this case, the portion moved into the collection container 115 and the portion remaining in the reaction container 101 can be washed, and separated into solid and liquid, and thereby obtaining barium titanate particles and the like.

Furthermore, according to these first to fourth embodiments, it is possible to relax the restriction on the size of a starting material. In most of conventional production methods, the bottom-up method is employed. Thus, to produce barium titanate in a size of a few nanometers, as a source material, it is necessary to use nanoparticles of TiO₂, BaCO₃, barium titanyl oxalate, and the like whose particle diameter at the level of the source material is 10 nm to 30 nm. Due to production of the source material of the nanoparticles or pretreatment, the process is complicated, or there is a cost problem. In this respect, in the methods for producing barium titanate fine particles according to the first to fourth embodiments, barium titanyl oxalate as a starting material is subjected to the action of decomposition by a subcritical or supercritical mixed medium, and thus it is possible to produce fine particles in a smaller size. Therefore, even when a source material of about a few micrometers is used, as a primary particle, barium titanate of less than 100 nm can be produced. Thus, it is not necessary to pulverize the source material to less than several tens of nanometers at the level of the source material.

Moreover, as described above, to produce fine particles in nanometer order, a high degree of supersaturation is required. In the first to fourth embodiments, barium titanyl oxalate powder is used as a source material. Thus, when the barium titanyl oxalate powder is decomposed to a subcritical mixed medium or a supercritical mixed medium, a high degree of supersaturation can be easily achieved locally, so that the mixed medium is not subjected to the restriction such as the solubility. Furthermore, a solid content product to be obtained is a single-phase barium titanate, and Ba or Ti content of waste liquid is less than a few ppm that is below the detection limit of ICP. In other words, oxalate source material can be converted into barium titanate at a conversion rate of nearly 100%.

Moreover, according to the first to fourth embodiments, barium titanyl oxalate powder, containing barium and titanium at a 1:1 ratio in one molecule originally, is used as a source material, so that it is possible to substantially-reduce the importance of mixing a reaction constituent that is required in the conventional technologies. As a result, in the flow method, even without a micromixer or a narrow pipe, there is no effect on the production of barium titanate. For example, with the large-bore reaction tube 3 having an inside diameter of 8 mm and a 1/4-inch Y-type mixer, the continuous-flow production equipment can synthesize barium titanate fine particles having an average particle diameter of 50 nm and a maximum particle diameter of 90 nm when the Reynolds number (Re = UL/ν, U: fluid velocity, L: characteristic length, ν: dynamic viscosity) is within a range of 4000 to 7000, and a flow of a fluid is in a multiphase turbulent flow state. Also, in a case of the 300-cc autoclave 21, titanate fine particles having a particle diameter of 100 nm to 150 nm can be synthesized with a low agitation speed of 300 rpm. Therefore, the practical application of the process is improved, and powder clogging is prevented from occurring, so that it is possible to achieve a high mass productivity.

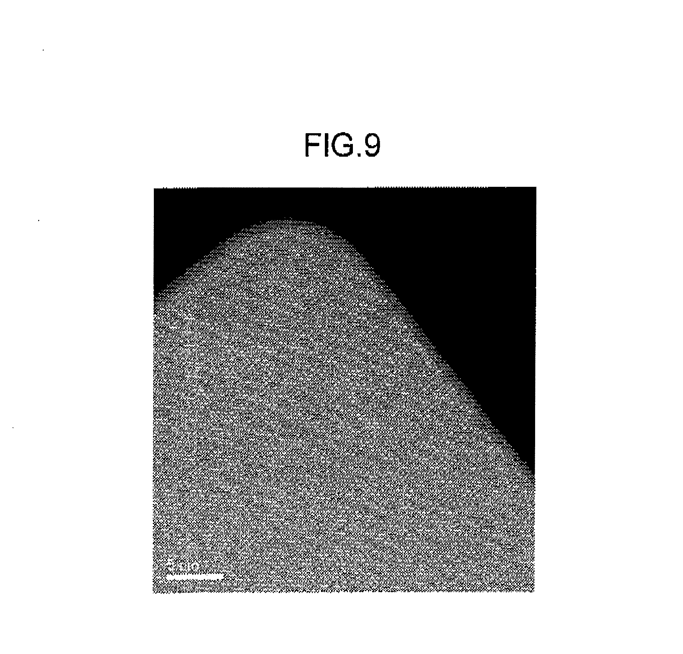

Furthermore, it is known that a crystalline body of barium titanate fine particle produced by a conventional hydrothermal synthesis has an OH group. According to the first and second embodiments, in a case of produced barium titanate, as shown in Fig. 9, an amount of pores (vacancy) is small, and the pores are hardly observed by a TEM. Fig. 9 is an explanatory diagram schematically-showing a high-angle annular dark-field scanning transmission electron microscopy (HAADF-STEM) image obtained through the observation of an atomic arrangement of synthesized fine particles.

### Fifth Embodiment

A fifth embodiment shows an example of application to an electronic-component manufacturing method for manufacturing an electronic component containing, as a building block, an electronic material produced with barium titanate fine particles as powder produced by any of the production methods according to the first to fourth embodiments. In the fifth embodiment, as an example of the electronic component, a laminated ceramic capacitor shall be manufactured.

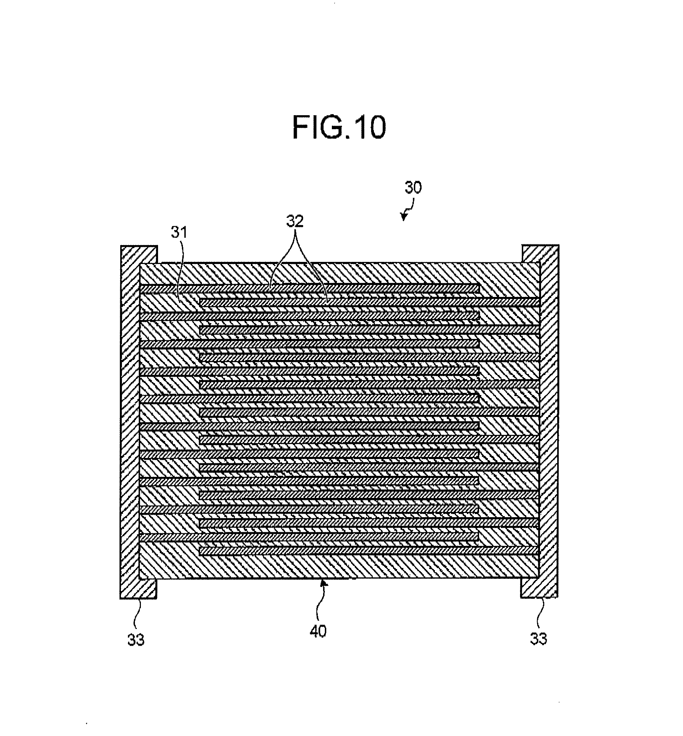

Fig. 10 is a cross-section diagram illustrating a configuration example of the laminated ceramic capacitor 30. The laminated ceramic capacitor 30 has a capacitor element main body 40 in which the dielectric layers 31 and the internal electrode layers 32 are alternately laminated. On both ends of the capacitor element main body 40, a pair of external electrodes 33, which are each electrically connected to the internal electrode layers 32 alternately-arranged inside the capacitor element main body 40, are formed.

The internal electrode layers 32 are laminated so that edge faces thereof are alternately exposed on surfaces of the opposed two ends of the capacitor element main body 40. An electrical conducting material contained in the internal electrode layers 32 is not particularly limited, and, for example, noble metal or base metal (for example, Ni or Ni alloy) can be used. Furthermore, a pair of the external electrodes 33 is connected to the exposed edge faces of the alternately-arranged internal electrode layers 32, and composes a capacitor circuit. An electrical conducting material contained in the external electrodes 33 is not particularly limited, and, for example, inexpensive Ni, Cu, or alloy of them can be used.

The dielectric layers 31 are a thin-film layer made of a dielectric material produced with barium titanate fine particles produced by any of the production methods according to the first and second embodiments as a source material.

The laminated ceramic capacitor 30 having such a configuration is manufactured in such a manner that a green chip is formed by a standard printing method or sheet method with a paste; the green chip is subjected to firing; and after that, the external electrode 33 is printed or transferred on the green chip.

When the printing method is employed, a paste for dielectric layer and a paste for internal electrode layer are printed on a substrate such as PET to be laminated, and cut into a predetermined shape, and then stripped from the substrate. The stripped one shall be referred to as a green chip. On the other hand, when the sheet method is employed, a green sheet is formed with a paste for dielectric layer, and a paste for internal electrode layer is printed on the green sheet, and then the formed one is laminated. The lamination shall be referred to as a green chip. Before being fired, the green chip is subjected to a debinding process.

The atmosphere at the time of firing the green chip can be arbitrarily determined depending on a type of electrical conducting material in the paste for internal electrode layer. When base metal, such as Ni or Ni alloy, is used as the electrical conducting material, the reduction firing atmosphere is preferred. Furthermore, a holding temperature in the firing is preferably 1000°C to 1400°C.

On the capacitor element main body 40 obtained as described above, the external electrodes 33 are formed in such a manner that the capacitor element main body 40 is subjected to edge polishing, and subjected to firing after a paste for external electrode is applied to the capacitor element main body 40. If necessary, a covering layer is formed on each of the surfaces of the external electrodes 33 by plating or the like.

The laminated ceramic capacitor 30 produced as described above, containing, as the dielectric layers 31, the thin-film layers made of the dielectric material produced with barium titanate fine particles as a source material, is mounted on a printed circuit board or the like by soldering or the like, and used in various electronic devices.

In the fifth embodiment, there is described an example of the application of the electronic-component manufacturing method to manufacturing of an electronic component including a capacitor that uses barium titanate fine particles produced by any of the production methods according to the first to fourth embodiments as a dielectric material. However, the electronic-component manufacturing method according to the present embodiment is not limited to this example. For example, the electronic-component manufacturing method can be applied to manufacturing of an electronic component using barium titanate fine particles as a piezoelectric material or an electronic material of a semiconductor or the like, for example, a PTC element.

Furthermore, the production equipment is preferably configured that an area in which particles are synthesized by reacting a source material, i.e., a surface having contact with the source material is subjected to gold plating. For example, in a case of the continuous-flow production equipment, it is preferable that at least the reaction tube is subjected to gold plating; and in a case of the batch production equipment, it is preferable that at least inside (an inner surface of) the autoclave is subjected to gold plating. In this way, flow paths of particles and a source material are subjected to gold plating, and thereby reducing a chance for an impurity to be mixed into the particles. Moreover, it is preferable that areas, pipes, and the like through which a source material and particles pass be also subjected to gold plating. The treatment applied to the area in which particles are synthesized by causing a source material to react and the areas through which the source material and the particles pass is not limited to the gold plating. As long as the reactivity can be reduced, any other means can be employed. For example, a surface having contact with the source material can be made of platinum or gold. Furthermore, when barium titanate is synthesized like in the present embodiment, the surface having contact with the source material can be made of titanium. When the surface having contact with the source material is made of titanium as the same element as barium titanate, it is possible to prevent an impurity from being mixed into particles to be produced.

In the above embodiment, there is described an example of the application of the electronic-component manufacturing method to manufacturing of an electronic component including a capacitor that uses barium titanate fine particles produced by the fine-particles synthesis method as a dielectric material. However, the electronic-component manufacturing method according to the present embodiment is not limited to this example. For example, the electronic-component manufacturing method can be applied to manufacturing of an electronic component using barium titanate fine particles as a piezoelectric material or an electronic material of a semiconductor or the like, for example, a PTC element.

Furthermore, in the above embodiment, there is described a case where barium titanate is synthesized and produced. The method of the present invention can be used as a method for the synthesis of various metal-oxide nanoparticles other than barium titanate, for example, a method for the synthesis of ferrite, a piezoelectric material, a positive-electrode material of a lithium secondary battery, a fluorescence substance, and the like.

There is described one example that the fine-particles synthesis method according to the fourth embodiment is applied to synthesis of potassium niobate. As a method for synthesis of orthorhombic potassium niobate particles, the one with the hydrothermal synthesis method has been reported conventionally (Japanese Patent Application Laid-open No. 2005-257957). However, in the conventional synthesis method, a reaction time is such an extremely long time as about 24 hours. By the application of the fine-particles synthesis method according to the first embodiment, potassium niobate nanoparticles smaller than particles reported in the conventional synthesis method can be obtained at the lower temperature and pressure and a extremely shorter time than those in the conventional synthesis method.

Nb₂O₅ and KOH were selected as starting materials, and adjusted with a stoichiometric proportion of 1:3.4. The adjusted starting materials and 250-cc ethanol as a solvent were thrown in the reaction container 101 of the batch production equipment 100 shown in Fig. 7, and the temperature and pressure of the reaction container 101 were increased to 280°C and about 13 MPa. After that, water was introduced into the reaction container 101 by the pump 109, and caused to react with a mixed medium of the starting materials and ethanol for 15 minutes. After the reaction, powder in the reaction container 101 was collected, and a product and a particle diameter were checked. The product was potassium niobate, and the particle diameter was about 150 nm. By the fine-particles synthesis method according to the first embodiment, orthorhombic potassium niobate particles of about 150 nm were obtained at an extremely shorter time as compared with the conventional method.

By applying the fine-particles synthesis method according to the present embodiment to the synthesis of fine particles used in a dielectric material, ferrite, a positive-electrode material of a lithium secondary battery, a fluorescence substance, and the like, nanoparticles having better characteristics can be produced. For example, as an example of the synthesis of dielectric nanoparticles, besides barium titanate, there are SrTiO₃, (Ba,Sr)TiO₃, (Ba,Ca)TiO_{3,} (Ca_{0.25}Cu_{0.75})TiO₃. Furthermore, the fine-particles synthesis method according to the present embodiment can be used for the synthesis of LiCoO₂ or LiFePO₄ as the positive-electrode material of the lithium secondary battery and the synthesis of BaO·6Fe₂O₃, ZnO·Fe₂O₃, or the like as the synthesis of ferrite nanoparticles.

### Example 1

In Example 1, solvolysis of barium titanyl oxalate with a supercritical mixed medium and synthesis of barium titanate were performed with the batch production equipment as shown in Fig. 5. For example, 200 cc of a slurry (barium titanyl oxalate powder of 20 g/L, 90% ethanol + 10% water, and NaOH for pH adjustment of 40 g/L) was put into the 300-cc autoclave 21, the autoclave 21 was heated by the heater 23 to increase the temperature and pressure in the container, and a reaction environment of the supercritical mixed medium was created at a critical temperature and a critical pressure lower than those of supercritical water, and thus oxalate was completely decomposed. Then, in a supercritical single-phase, tetragonal barium titanate was produced by synthesis. Table 1 shows results of analysis of such experiments at different ethanol ratios, heating temperatures, pressurizing pressures, and the like. Incidentally, "BTO" in Table 1 denotes barium titanyl oxalate BaTiO(C₂O₄)₂·4H₂O. Furthermore, a relation of an experiment condition of each of the experiments and a critical condition is shown in Figs. 1A and 1B. In Figs. 1A and 1B, each experiment condition is denoted by the experiment number.

**Table 1**

| Experiment number | BTO size [µm] | Ethanol [mol%] | Final pressure [MPa] | Final temperature [°C] | Heating Time [min] | Mixedmedium critical pressure reference value [MPa] | Mixedmedium critical temperature reference value [°C] | FWHM (111) | d50 (BET) [Nm] | TG weight reduction rate [%] 200 to 1000 [°C] |
|---|---|---|---|---|---|---|---|---|---|---|
| 1 | 0.5 | 84% | 20 | 301 | 55 | 7.2 | 252 | 0.128 | 434 | -0.3 |
| 2 | 1.2 | 82% | 16 | 278 | 42 | 7.3 | 254 | 0.142 | 238 | -0.2 |
| 3 | 0.5 | 74% | 24 | 334 | 55 | 8.1 | 259 | 0.149 | 169 | -0.5 |
| 4 | 0.5 | 74% | 20 | 308 | 48 | 8.1 | 259 | 0.119 | N.A. | -0.6 |
| 5 | 0.5 | 74% | 21 | 269 | 39 | 8.1 | 259 | 0.231 | 118 | -1.0 |
| 6 | 0.5 | 74% | 8 | 303 | 50 | 8.1 | 259 | 0.157 | 223 | -1.2 |
| 7 | 0.5 | 54% | 10 | 275 | 40 | 10.1 | 277 | 0.172 | 97 | -0.4 |
| 8 | 0.5 | 39% | 24 | 320 | 52 | 12.2 | 296 | 0.147 | 180 | -0.4 |
| 9 | 1.3 | 4% | 20 | 350 | 58 | 20.7 | 365 | 0.155 | 364 | -3.3 |

According to the results shown in Table 1, as will be noted from FWHM (111) indicating a full-width at half-maximum of the XRD (111) peak, all samples obtained above and around the critical condition of the mixed medium showed the high crystallinity. It was found that barium titanate fine particles synthesized especially under conditions exceeding not only the reaction temperature but also the critical condition of the mixed medium (both the critical pressure and the critical temperature) showed the higher crystallinity. In either case, FWHM (111) was around 0.23 or less, and the higher crystallinity was shown as compared with the conventional example as shown in JP-A No. 2003-261329 and JP-A No. 2005-289737.

On the other hand, after 220 cc of a source material slurry of barium titanyl oxalate, water, and NaOH was put into the 500-cc autoclave 21, and the temperature of the autoclave 21 was increased to about 200°C, the pressure of the autoclave 21 became about 4 MPa to 5 MPa. After that, samples were held in the autoclave 21 for about 30 seconds, and subjected to cooling. Then, in the collected samples, barium titanyl oxalate was partly decomposed, but monocrystal barium titanate was not produced. In this manner, in a state where the reaction environment does not come up to the critical condition and around the critical condition, it turns out that monocrystal barium titanate cannot be produced.

### Example 2

In Example 2, solvolysis of barium titanyl oxalate with a supercritical mixed medium and synthesis of barium titanate were performed with the continuous-flow production equipment as shown in Fig. 2. An adjusted room-temperature source material slurry (an amount of barium titanyl oxalate powder to be prepared of 25 g/L, an amount of NaOH to be added of 40 g/L, and ethanol) was mixed with high-temperature water of about 480°C at a flow rate of 10 cc/min with source material slurry : high-temperature water = about 1 : 5 to 8, and introduced to the reaction tube 3 of a length of 50 cm and an inside diameter of 8 mm. Then, the temperature and pressure were set to higher values than an estimated critical condition of the mixed medium, and a reaction environment of the supercritical mixed medium was created in the reaction tube 3. A transit time of the mixed medium containing the slurry in the reaction tube 3 was set to about 5 to 8 seconds. Then, a product was cooled to room temperature by the cooling bath 9 in a few seconds. Table 2 shows results of analysis of such experiments on production of barium titanate fine particles of less than 100 nm at different ethanol ratios, heating temperatures, pressurizing pressures, and the like. Furthermore, a relation of an experiment condition of each of the experiments and a critical condition is shown in Figs. 1A and 1B. In Figs. 1A and 1B, each experiment condition is denoted by the experiment number.

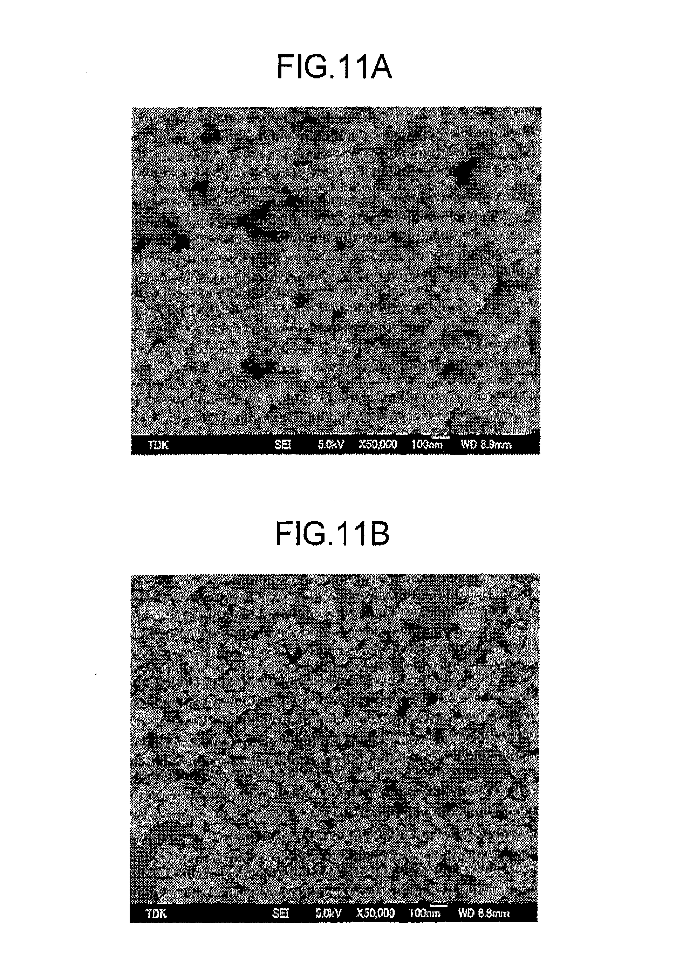

Furthermore, an average particle diameter and a standard deviation of about 200 particles obtained from a SEM photo were calculated, and shown in Table 2. In Table 2, the average particle diameter and the standard deviation are denoted by "d50" and "sd", respectively. The average particle diameter and the standard deviation were calculated by measuring the particle sizes of about 250 to 300 particles with a SEM photo as shown in Figs. 11A and 11B. Fig. 11A is an explanatory diagram schematically-showing a SEM photo of produced particles as sample A. Fig. 11B is an explanatory diagram schematically-showing a SEM photo of produced particles as sample B.

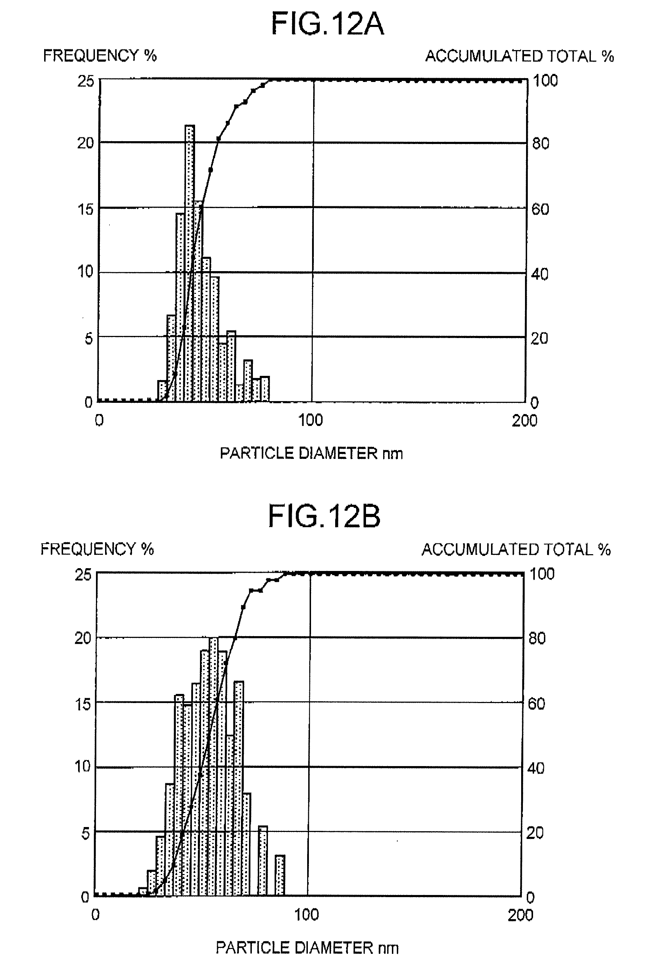

From the SEM photos shown in Figs. 11A and 11B, the sizes of about 250 to 300 particles in each of sample A and sample B were measured, and the analyzed size distribution was shown in Figs. 11A and 11B. Fig. 12A is a graph showing measured results of the particle size distribution shown in Fig. 11A. Fig. 12B is a graph showing measured results of the particle size distribution shown in Fig. 11B. As shown in Figs. 12A and 12B, it turns out that sample A and sample B both have the sharp size distribution. Table 2 shows measured results of several different types of samples in addition to sample A and sample B.

**Table 2**

| Experiment number | Ethanol [mol] | Pressure [MPa] | Reaction tube exit temperature [°C] | Flow [cc/ min] | Reaction tube transmit time [see] | d50 (SEM) [nm] | sd (SEM) [nm] | sd/d50 | BET [m²/g] | FWHM (111) |
|---|---|---|---|---|---|---|---|---|---|---|
| A | 74% | 20 | 270 | 55 | 8 | 50 | 10 | 0.20 | 27.1 | 0.312 |
| B | 20% | 35 | 333 | 75 | 6 | 50 | 14 | 0.28 | 24.5 | 0.303 |
| C | 19% | 20 | 250 | 68 | 7 | 70 | 20 | 0.30 | 19.8 | 0.337 |
| D | 6% | 30 | 375 | 55 | 8 | 50 | 15 | 0.30 | 21.8 | 0.250 |
| E | 4% | 30 | 390 | 88 | 5 | 60 | 12 | 0.20 | 17.3 | 0.172 |
| F | Methanol 3% | 33 | 360 | 100 | 5 | 50 | 13 | 0.26 | 37.7 | 0.321 |

According to the results shown in Table 2, FWHM (111) indicating a full-width at half-maximum of the XRD (111) peak is around 0.33 or less, and shows the higher crystallinity as compared with the conventional example as shown in JP-A No. 2005-289737 and the like. Furthermore, a specific surface area S measured by a BET is, for example, around 20 m²/g, and a particle diameter calculated on the basis of a density of 5.9 g/cc is about 50 nm. Moreover, it turns out that in all the experiments, the sharp size distribution was obtained under the condition of sd/d50 < 0.3. Furthermore, as shown in Figs. 11A and 11B, it turns out that orderly square particles were produced in both sample A and sample B. In addition, by the analysis using the Rietveld method, it turns out that both of them had a tetragonal structure of c/a = 1.003. Also in a case of using methanol instead of ethanol, highly-crystalline barium titanate nanoparticles were obtained. As described above, it turns out that both the high crystallinity and the nanoparticulation were achieved in Example 2.

### Example 3

Subsequently, as Example 3, an experiment on synthesis of barium titanate like in the third embodiment was performed with equipment (produced by OM LAB Co.) including an SUS autoclave MMJ-500 whose inner surface is subjected to gold plating of about 5 µm. Total qualitative analysis of the synthesized barium titanate particles by ICP-AES was performed, and quantitative analysis of a detected element by the calibration curve method was performed. Furthermore, for comparison, an experiment on synthesis of barium titanate with equipment that is not subjected to gold plating was performed. Table 3 shows measured results of total qualitative analysis of the synthesized barium titanate particles by ICP-AES and quantitative analysis of a detected element by the calibration curve method.

**Table 3**

| Reactor material | Pressure | Reaction temperature | ET ratio | Fe content | Cr content | Ni content |
|---|---|---|---|---|---|---|
| | [MPa] | [°C] | [wt%] | [ppm] | [ppm] | [ppm] |
| SUS | 20 | 400 | 90% | 1352 | 3532 | 3151 |
| SUS | 20 | 308 | 88% | 1419 | 854 | 488 |
| SUS | 18 | 356 | Pure water | 884 | 447 | 866 |
| SUS | 12 | 313 | Pure water | 2222 | 601 | 820 |
| Gold plating | 20 | 300 | 88% | 186 | 55 | 200 |
| Gold plating | 17 | 233 | 93% | 156 | 25 | 170 |

As shown in Table 3, comparing an impurity content of barium titanate synthesized by gold-plated batch equipment with an impurity content of barium titanate synthesized by an SUS reactor, it turns out that by applying gold plating to the reactor, contents of Fe, Cr, and Ni as elements composing SUS became 200 ppm or less. In this way, it turns out that particles having a low impurity content can be synthesized by the application of gold plating.

Furthermore, an experiment on synthesis of barium titanate was performed under the same conditions as Example 3, i.e., a reactor is subjected to gold plating, except that as a pH adjuster, TMAH (Tetra methyl ammonium hydroxide) as an organic pH adjuster was used instead of NaOH. Table 4 shows a measured result in this case.

**Table 4**

| Reactor | Pressure | Reaction temperature | ET ratio | Fe content | Cr content | Ni content |
|---|---|---|---|---|---|---|
| | [MPa] | [°C] | [wt%] | [ppm] | [ppm] | [ppm] |
| Gold plating | 11 | 270 | 69% | 36 | 0 | 172 |

Furthermore, under experimental conditions of using TiO₂ and Ba(OH)₂ as source materials and methanol as solution without using the pH adjuster, an experiment on synthesis of barium titanate was performed under the same conditions as Example 3, i.e., a reactor is subjected to gold plating. Table 5 shows measured results in this case.

**Table 5**

| Reactor | Pressure | Reaction temperature | MT ratio | Fecontent | Cr content | Ni content |
|---|---|---|---|---|---|---|
| | [MPa] | [°C] | [wt%] | [ppm] | [ppm] | [ppm] |
| Gold | 10 | 272 | 92% | 0 | 0 | 0 |
| Gold plating | 10 | 270 | 84% | 2.9 | 0 | 0 |
| Gold plating | 14 | 280 | 84% | 0 | 0 | 0 |

As shown in Tables 3 to 5, it turns out that a corrosion mechanism was changed by adjustment among the pH adjuster, the source material, and the solvent, and thus an impurity content was further reduced.

### Example 4

Subsequently, there is described a case where barium titanate was synthesized by mixing a source material slurry after being heated with an accelerant containing water with the continuous-flow production equipment as shown in Fig. 4. A pipe of 1/8 inch in diameter was used. In Example 4, first, the pressure of the adjusted room-temperature source material slurry (methanol, and an amount of TiO₂ and Ba(OH)₂ to be prepared of 2 g/L) was intensified to 20 MPa, and the temperature of the adjusted room-temperature source material slurry was heated to about 400°C, and then supplied to the side of the reaction tube 3 at a flow rate of 20 cc/min. Furthermore, a room-temperature NaOH (4 g/L) aqueous solution was merged into the slurry flowing to the side of the reaction tube 3 at a flow rate of about 4 cc/min. In other words, the source material slurry and the aqueous solution were mixed at a ratio of about 5:1. The temperature of a mixed fluid of the source material slurry and the aqueous solution introduced into the reaction tube 3 became 295°C. The mixed fluid in the reaction tube 3 had a higher value than a critical condition of the mixed medium, i.e., estimated temperature and pressure, and a reaction environment with a supercritical mixed medium was created in the reaction tube 3. Moreover, a transit time of the mixed medium containing the slurry in the reaction tube 3 was set to around 3 seconds. Then, the mixed fluid passing through the reaction tube 3 (a product produced in the reaction tube 3) was cooled to room temperature by the cooling bath 9 in a few seconds.

A mixing ratio of the slurry to water was set to about 5:1, and thus barium titanate was synthesized under the condition of about more than 10 times higher mixing ratio (ratio of slurry to water) than that is in Example 2. Consequently, it turns out that also in a case of a higher mixing ratio, highly-crystalline barium titanate having an average size of several tens of nanometers can be synthesized, and it is possible to improve the mass productivity and to increase a ratio of an amount of source material to an amount of water supplied to the reaction tube at about a single-digit.

### Example 5

As another example, in a case where a mixing ratio of a slurry to high-temperature water is 6:1, a measurement was performed with the continuous-flow production equipment as shown in Fig. 4 in the same manner as Example 4. Specifically, an adjusted source material slurry (an amount of barium titanyl oxalate to be prepared of 2 g/L, an amount of NaOH to be added of 1.5 g/L, and ethanol) was heated to 315°C, and mixed with room-temperature water at a flow rate of 18 cc/min and a ratio of 6:1, and then introduced into the reaction tube 3. Then, the temperature and pressure were adjusted to 275°C and 15 MPa those higher than the estimated critical condition of the mixed medium, and a reaction environment with a supercritical mixed medium was created in the reaction tube 3. Furthermore, a transit time of the mixed medium containing the slurry in the reaction tube 3 was set to around 3 seconds. Then, a product was cooled to room temperature by the cooling bath 9 in a few seconds.

As a result of the production under the above conditions, an average particle size d50 was about 30 nm, FWHM (111) was 0.35, and a specific surface area SSA was 42.4 m²/g. In this way, also in a case of the mixing ratio of 6:1, particles were synthesized and produced desirably. Consequently, it turns out that also in a case of a high mixing ratio, highly-crystalline barium titanate having an average size of several tens of nanometers can be synthesized, and it is possible to improve the mass productivity and to increase a ratio of an amount of source material to an amount of water supplied to the reaction tube at about a single-digit.

### Example 6

Subsequently, examples according to the present invention are explained below. Example 6 is production of barium titanate particles with the batch equipment shown in Fig. 7 under the following experiment condition. As the experiment condition, a slurry was formed by mixing 270 cc of methanol and about 28 g of NaOH into the one that about 25.8 g of Ba(OH)·8R₂O (98% purity) was added to 6.4 g of TiO₂ powder. At this time, a ratio of Ba to Ti was 1:1. The formed slurry was put into the reaction container (the autoclave) having a volume of 500 cc, and heated to 280°C. After that, the preliminary pressure of the reaction container was adjusted to about 13 MPa, and a supercritical state, exceeding the critical condition of methanol, was created.

During the above process, the slurry was agitated by causing the agitator to rotate at a rotation speed of about 1000 rpm, and thereby dispersing the slurry well. Room-temperature water was injected into the slurry in the reaction container at 20 cc/min for 2 minutes. A concentration of methanol of the slurry after the injection of the water decreased to 84wt%. The temperature in the reaction container decreased to 277°C, but immediately recovered to 280°C by the application of heat by the heater.

The slurry initiated a reaction by the injection of the water, and the pressure in the reaction container remained unchanged at 13 MPa. After the slurry underwent the reaction for 30 seconds, the valve was opened to discharge a fluid in the reaction container into the collection container. Consequently, the pressure in the reaction container decreased rapidly, and the reaction was stopped within 2 minutes. After the slurry in the reaction container was completely cooled, about 14.8 g of a product remaining in the reaction container was collected. Observing the product with the SEM, an average particle diameter was about 78 nm. Furthermore, analyzing the product with the XRD, the product had FWHM (111) = 0.286 and c/a = 1.007. In this manner, in Example 6, highly-crystalline nanoparticles were obtained.

### Example 7

Example 7 is production of barium titanate particles with the batch equipment shown in Fig. 7 under the following experiment condition. As the experiment condition, a slurry was formed by mixing 36 g of pulverized barium titanyl oxalate, 271 cc of methanol, and about 28 g of NaOH. The formed slurry was put into the reaction container having a volume of 500 cc, and heated to 280°C. After that, the pressure in the reaction container was adjusted to about 13.5 MPa.

Then, room-temperature water was injected into the slurry in the reaction container at 20 cc/min for 2 minutes. The slurry initiated a reaction by the injection of the water, and a concentration of methanol of the slurry after the injection of the water decreased to 84wt%. Furthermore, the pressure in the reaction container was changed to 13 MPa. After the slurry underwent the reaction for 30 seconds, the pressure in the reaction container was decreased to stop the reaction. A product was ejected into the collection container, and 2 g of the product was collected. The slurry remaining in the reaction container was cooled naturally to room temperature in about 2 hours. After that, about 13.3 g of a product was collected.

By the XRD analysis, it was found that both of the products are barium titanate. Barium titanate obtained by being cooled by the ejection had an average particle diameter of about 40 nm, FWHM (111) = 0.291, and c/a = 1.005. On the other hand, barium titanate obtained by being naturally-cooled in the reaction container had an average particle diameter of about 60 nm, FWHM (111) = 0.232, and c/a = 1.005. In Example 7, in either case, highly-crystalline barium titanate nanoparticles were obtained. It was found that although the barium titanate fine particles dried by residual heat remaining in the reaction container grew in particle diameter slightly, the crystallinity was higher than that of the rapidly-cooled one.

### Example 8

Example 8 is an example of no NaOH used. With the batch equipment shown in Fig. 7, a slurry was formed by mixing 271 cc of IPA into the one that about 22.94 g of Ba(OH)₂·SH₂O (98% purity) was added to 6.4 g of TiO₂ powder. The formed slurry was put into the reaction container (the autoclave) having a volume of 500 cc, and heated to 280°C. After that, the preliminary pressure of the reaction container was adjusted to about 12.5 MPa, and a supercritical state, exceeding the critical condition of IPA, was created. During the process, the slurry was agitated by causing the agitator to rotate at a rotation speed of about 1000 rpm, and thereby dispersing the slurry well. Room-temperature water was injected into the slurry in the reaction container at 20 cc/min for 2 minutes. A concentration of methanol of the slurry after the injection of the water decreased to 84wt%. The temperature in the reaction container decreased to 276°C, but immediately recovered to 280°C by the application of heat by the heater. The pressure in the reaction container increased to 17.5 MPa by the injection of the water, and the slurry initiated a reaction. After the slurry underwent the reaction for 30 seconds, the valve was opened to discharge a fluid in the reaction container into the collection container. Consequently, the pressure in the reaction container decreased rapidly, and the reaction was stopped within 2 minutes. After the slurry in the reaction container was completely cooled, about 14.3 g of a product remaining in the reaction container was collected. Observing the product with the SEM, an average particle diameter was about 50 nm. Furthermore, analyzing the product with the XRD, the product had FWHM (111) = 0.322 and c/a = 1.006. In this manner, in Example 8, Na-free highly-pure highly-crystalline barium titanate nanoparticles were obtained.

### Comparative Example 1

In Comparative example 1, 220 cc of a slurry formed of barium titanyl oxalate, water, and NaOH was thrown in the 500-cc reaction container, and heated to about 200°C. After that, the pressure in the reaction container was adjusted to about 4 MPa to 5 MPa. The slurry was held in this state for about 30 seconds, and cooled. In a collected sample, barium titanyl oxalate was partly decomposed, but monocrystal barium titanate was not produced.

### Comparative Example 2

In Comparative example 2, 220 cc of a slurry formed of barium titanyl oxalate, ethanol, and NaOH was thrown in the 500-cc reaction container, and heated to about 200°C. After that, water was thrown in the reaction container so as to be a 1:1 ratio of water to ethanol, and the pressure in the reaction container was adjusted to about 4 MPa to 5 MPa. The slurry was held in this state for about 30 seconds, and released from the reaction container, thereby collecting a product. In the product, barium titanyl oxalate was partly decomposed, but monocrystal barium titanate was not produced. As can be seen from Comparative Examples 1 and 2, to obtain a sufficient reaction rate, it is preferable to have pressure and temperature higher than the critical pressure and critical temperature of the mixed medium.

According to an aspect of the present invention, with a mixed medium of water and a solvent of lower critical temperature and lower critical pressure than water, the mixed medium comes into a supercritical state at a lower temperature and a lower pressure than those in a case of water alone, a reaction environment of a subcritical or supercritical state of the mixed medium is created. Therefore, it is possible to reduce a critical temperature and/or a critical pressure for bringing into the subcritical or supercritical state, and thus it is possible to reduce impurity incorporation into a product caused by corrosion and also possible to broaden choices of materials of a reaction container and the like. Furthermore, by applying gold plating to the surface of a reactor, impurities incorporated into a product can be reduced. Moreover, by increasing an alcohol ratio of the mixed medium, a very high reaction rate of pure water in the synthesis can be substantially reduced, and synthesized particles can be quickly diffused by Brownian motion and the like by the action of the solvent thereby achieving a better dispersion state.

Furthermore, according to a second aspect of the present invention, taking advantage of a characteristic that even though a source material slurry prepared with a solvent such as alcohol is made to have a high temperature and a high pressure first, the source material slurry hardly undergoes a reaction, after being heated and pressurized, the source material slurry is thrown in a reaction path. Thus, because of a large amount of accelerant, the subcritical or supercritical state can be created without heating the source material slurry. Therefore, a conventional mixing ratio of supercritical water to the source material slurry can be reversed, i.e., an amount of the source material slurry can be increased to be larger than that of the accelerant. Thus, a concentration of the source material in a reaction region can be increased at about a single-digit higher rate, and a larger amount of nanoparticles can be produced. Moreover, by employing a high-temperature source material slurry, the temperature of the accelerant thrown in the reaction path can be reduced. For example, when the temperature after mixing is to be at 300°C, there is no need to heat the slurry and water to increase the preheat temperature of the slurry and water to 300°C or more. Especially, when a water ratio is a few percent, room-temperature water can be used. In this manner, there is no need to heat the accelerant containing water up to 400°C to 500°C, and thus it is possible to reduce a corrosion due to high-temperature water, and also possible to improve safety of the reaction region to be subjected to the high temperature and pressure.

Moreover, a fine-particles synthesis method and an electronic-component manufacturing method according to a third aspect of the present invention can achieve creation of a subcritical or supercritical reaction environment and production of highly-crystallin fine particles having a small particle diameter by a batch process.

## Claims

1. A method of synthesizing fine particles, comprising:
creating a subcritical or supercritical reaction environment by at least one of heating and applying pressure to a mixed medium of water and a solvent of lower critical temperature and lower critical pressure than water, so that the mixed medium comes into a supercritical state at a lower temperature and a lower pressure than those of pure water; and
leaving a source material under the created reaction environment in a reaction field for a predetermined time to produce fine particles.

2. The method according to claim 1, wherein the solvent contains an organic solvent that is soluble in water in a supercritical state.

3. A method of manufacturing an electronic component, comprising manufacturing the electronic component containing an electronic material produced with the fine particles produced by the method according to claim 1 or 2.

4. A method of synthesizing fine particles, comprising:
pressurizing and heating a source material slurry, the slurry being prepared by mixing source materials and a solvent that comes into a supercritical state at a lower pressure and a lower temperature than those of pure water ;
creating a subcritical or supercritical reaction environment in a reaction path by application of pressure while supplying the pressurized and heated source material slurry and an accelerant containing water separately to the reaction path;
leaving the source material slurry under the created reaction environment in a reaction field for a predetermined time to produce fine particles; and
cooling the produced fine particles to stop growth of the fine particles.

5. The method according to claim 4, wherein the creating includes supplying the pressurized and heated source material slurry to the reaction path at a higher volume ratio than that of the water contained in the accelerant.

6. The method according to claim 4, further comprising heating the accelerant, wherein
the creating includes supplying the heated accelerant to the reaction path.

7. The method according to any one of claims 4 to 6, wherein the creating includes bringing the source material slurry into a supercritical state before the source material slurry is mixed with the accelerant.

8. The method according to any one of claims 4 to 7, wherein the solvent contains an organic solvent that is soluble in water in a supercritical state.

9. The method according to any one of claims 4 to 8, wherein the accelerant contains water.

10. A method of manufacturing an electronic component, comprising manufacturing the electronic component containing an electronic material produced with the fine particles produced by the method according to any one of claims 4 to 9.

11. A method of synthesizing fine particles, comprising:
at least heating a slurry, the slurry being prepared by mixing source materials and a solvent that comes into a supercritical state at a lower pressure and a lower temperature than those of pure water;
creating a subcritical or supercritical reaction environment by applying at least heat to a mixture of the heated slurry and an accelerant containing water;
leaving the slurry under the reaction environment for a predetermined time to produce fine particles; and
stopping growth of the fine particles after a lapse of the predetermined time.

12. The method according to claim 11, wherein
the heating includes at least heating the slurry thrown in a reaction container,
the creating includes adding the accelerant to the at least heated slurry to prepare the mixture, and
the stopping includes at least one of depressurizing the slurry in the reaction container and cooling the slurry in the reaction container to stop the growth of the fine particles.

13. The method according to claim 11 or 12, further comprising pressurizing the slurry at the heating.

14. The method according to any one of claims 11 to 13, wherein the stopping includes cooling and depressurizing the slurry under the reaction environment to stop the growth of the fine particles.

15. The method according to any one of claims 11 to 14, wherein the creating includes mixing the slurry and the accelerant to prepare the mixture, the accelerant being after being heated.

16. The method according to any one of claims 11 to 15, wherein the creating includes adding the accelerant to the slurry to prepare the mixture while agitating the slurry.

17. The powder synthesis method according to any of claims 11 to 16, wherein the slurry is brought into the supercritical state of the solvent before the accelerant is added to the slurry.

18. The method according to any one of claims 11 to 17, wherein the solvent contains an organic solvent that is soluble in water in a supercritical state.

19. The method according to any one of claims 11 to 18, wherein the accelerant contains water.

20. A method of manufacturing an electronic component, comprising manufacturing the electronic component containing an electronic material produced with the fine particles produced by the method according to any one of claims 11 to 19.
